# EUROPEAN PATENT SPECIFICATION

(11) **EP 2 632 054 B1**
(45) Date of publication and mention of the grant of the patent: **30.08.2017**
(21) Application number: 12001173.9
(22) Date of filing: 22.02.2012
(51) Int. Cl.: H04B 3/32, H04B 3/487, H04L 5/14

(54) **Time sharing electronic communication method, apparatus and system**
Verfahren, Vorrichtung und System zur elektronischen Timesharing-Kommunikation
Procédé de communication électronique de partage de temps, appareil et système

(43) Date of publication of application: 28.08.2013
(73) Proprietor: Lantiq Deutschland GmbH, 85579 Neubiberg (DE)
(72) Inventor: Strobel, Rainer, 86678 Ehingen (DE); Smaoui, Lilia, 80809 München (DE)
(74) Representative: Kraus & Weisert Patentanwälte PartGmbB

(56) References cited:
- WO-A1-2010/018562
- US-A- 6 141 565
- US-A1- 2005 123 027

## Description

In many communication transmission systems, there are multiple parallel transmissions bound together which can cause crosstalk between the lines. This results in a coupling between the achievable data rates of the lines within the binder, which means that increasing the transmit power, and thus the rate, of one link, may reduce the data rates of the other links. Transmissions in a cable binder are one example of such a communication transmission system. Crosstalk also occurs in wireless communication, in which adjacent or nearby channels may be subject to what is sometimes called "co-channel interference". Many kinds of communication systems, with multiple communication lines or channels located in close proximity to one another, are subject to the phenomenon of crosstalk.

Typical solutions to this problem include physical separation of lines, mechanical shielding of lines from one another, and reduction in either the data rates or the communication quality or both, in the face of the effects of crosstalk. Another solution is called "Upstream Power Backoff", in which a reference length of transmission and two parameters are used to calculate transmission powers assigned to each communication line at various times. As the number of communication lines increases, the scheduling complexities become such that typical optimization algorithms, including Upstream Power Backoff, simply cannot be used. Alternative solutions may then use other algorithms, such as iterative water filling, but none of these provide a perfect solution. Moreover, alternative solutions have disadvantages in that they cannot adjust power levels of multiple lines substantially in real-time, and they cannot switch between multiple pre-calculated configurations substantially in real-time.

Further, in the alternative solutions, a system may be planned as an optimal configuration for a particular optimization criterion. There are at least three such optimization criteria which may be implemented. Each optimization criterion is, at the time of its implementation, an alternative to the other two criteria, according to the alternative solutions. These three alternative implementation criteria are "absolute fairness", which means maximizing the rate of the weakest link such that rate *u* = max min*ᵢ*(*Rᵢ*), "relative fairness", which means maximizing the overall system rate but subject to the condition that each remote terminal is communicating at a specific minimum, where *u* = max∑*ᵢ*(logR*ᵢ*), or "system maximization", which means maximizing the weighted sum of all data rates *u* = max ∑*ᵢ*(*wᵢ · Rᵢ*).

The task of finding transceiver settings in a communication system that lead to a desired rate configuration, typically requires very complex optimization. The effort to find optimal parameters is often so serious and burdensome, that only inexact approximations of optimal settings are used. Further, as the number of lines in systems increase, the disadvantages of the alternative solutions become increasingly severe. International Patent Application WO 2010/018562 discloses a technique for noise mitigation enabling dynamic determination of parameters required for management of transmission in xDSL channels. The technique combines the conventional noise mitigation techniques with systematic determining of crosstalk readings at each and every line of the xDSL binder, in particular with the DSM (Dynamic Spectrum Management) mechanism. The method comprises a step of preestimating an effect of introducing a new line to or dropping a line from a specific existing xDSL system, as if the system had already converged to its new stable state.

U.S. Patent Application US 2005/0123027 discloses a method of estimating the configuration of a DSL system. The method comprises collecting performance-characterizing operational data from the xDSL system, identifying a plurality of potential xDSL system models, evaluating the correlation between each potential system model and the collected operational data, and selecting one of the potential system models that most closely correlates to the operational data. Evaluating the correlation comprises at least one of the following: comparing observed operational data, generated by user use of the xDSL system, to each identified possible system model in the plurality of system models; or comparing prompted operational data, generated by stimulating the xDSL system, to each identified possible system model in the plurality of system models; or comparing time-relative operational data, generated by creating time-relative events within the xDSL system, to each identified possible system model in the plurality of system models.

U.S. Patent US 6,141,565 discloses to continuously provide network parameters to various network elements in a cellular PCs or other wireless communication network in order to optimize operation of the network. Network parameters are provided based on predicted or historical network conditions or based on monitored network conditions. A database of network parameters optimized for particular network conditions is provided which may be updated with parameters optimized in real-time. The independent claims define the invention in various aspects. The dependent claims define embodiments according to the invention.

A transceiver architecture is disclosed herein with respect to at least one embodiment that is able to switch among different configurations, thus enhancing communication rates and allowing the overall system performance to move closer toward optimization. The enhanced communication rates may result in higher throughput rates, or higher quality of transmissions, or both. In some embodiments, data rates available to different communication units may be enhanced, possibly even beyond guaranteed rates, by allocating the bandwidth of other units that are either inactive or that are using less than their own guaranteed bandwidth.

A system is provided that is operative to serve multiple electronic communication lines. The system includes a distribution point, which includes a central unit and multiple transceivers. The system also includes multiple line interfaces, a crosstalk channel, and multiple remote terminals. The system is configured to compute locally optimal communication configurations, store in memory data about said configurations, process said data into time sharing information, and convey such time sharing information to the transceivers and the remote terminals. The receivers and remote terminals later transmit in accordance with such time sharing information.

A system is provided that is operative to serve multiple electronic communication lines. The system includes a distribution point, which itself includes a central unit and multiple transceivers. The system also includes multiple line interfaces, and a crosstalk channel. The system is configured to compute locally optimal communication configurations, store in memory data about said configurations, process said data into time sharing information, and to convey such time sharing information to the transceivers. The transceivers later transmit in accordance with such time sharing information.

In another variant, a central unit in communication system, where said system is operative to serve multiple electronic communication lines. The communication unit includes a unit that receives electronic data related to receiver channel characteristics. The communication unit also includes an optimizer that operates an optimization routine to compute multiple locally optimal configurations and to identify locally optimal configuration points needed to reach desired data rates. The communication unit also includes a memory to store the locally optimal configurations and locally optimal configuration points. The communication unit also includes means for computing a media access plan to achieve optimal system communication according to a criterion. The communication unit also includes means for conveying the media access plan to transceivers that will transmit in accordance with the plan.

One embodiment is a method for enhancing communication in a system with a plurality of electronic communication connections. Multiple locally optimal configurations and parameters required to build such configurations are pre-computed. Data about the configurations and the parameters are stored in a memory. The data is processed to create time sharing information. The time sharing information is conveyed to communication units so that such communication units may transmit at such times and such power levels as to achieve, according to some criterion, enhanced communication within the system.

In a first aspect the invention encompasses a method for use in a system having a plurality of units and at least one resource shared between the units. The method comprises pre-determining a plurality of preferred system configurations for use of the shared resource; storing in a memory parameter values reflective of the plurality of preferred system configurations; and processing said parameter values to create sharing information. An embodiment comprises providing said sharing information to one or more of said plurality of units. At least one effect of the method according to the invention in the first aspect is that such units may use the resource shared between the units, herein also simply called "shared resource", in accordance the preferred system configuration so as to achieve enhance use of the shared resource within the system". In an embodiment the enhanced use may be measured or otherwise determined according to a pre-determined criterion. A particular, effect of the invention may be use of the shared resource beyond capacity as determined conventionally by taking into account guaranteed rates of use of the shared resource and thus reduce under-use of the shared resource.

In an embodiment predetermining the plurality of preferred system configurations includes pre-determining the criterion according to witch the preference is to be established, A preference may be defined so as to achieve an optimal system configuration. In an embodiments according to the Invention in the first aspect the criterion is selected from the groupe consisting of (i) a rule for absolute fairness; (ii) a rule for relative fairness; and (iii) a rule for maximizing a sum of all rates of use of the shared resource.

Il an embodiment according to the invention in the first aspect pre-determining the plurality of preferred system configurations include pre-computing a plurality of locally optimal configurations. Herein "optimal" may mean, eg, from a system designer's or a system configurator's point of view "subjectively optimal", The system designer or the system configurator perceives the respective configurations as preferable over alternative configurations , eg, known to the system designer or is the system configurator. In an embodiment the subjectively optimal configuration is also objectively optimal. In an embodiment of the method according to the invention in the first aspect predetermining the plurality of preferred system configurations includes comprises computing parameters required to build such configurations. Herein "competing parameters" includes the meaning of competing a value of a pre-identified parameter.

In an embodiment the shared resource is provided as a communication coupling. In an embodiments the coupling is provided by a connection, in particular an electronic connection. In an embodiments the coupling is provided as a communication channel. The channel may be provided as a physical channel. The channel may be provided as a logical channel. The system may encompass a plurality of kinds of coupling. In an embodiment the sharing informations relates to time sharing; in a particular embodiment the time sharing relates to use of the electronic communication connection in time sharing, for example, by one or more of the plurality of units in the system.

In a variant according to the invention in the first aspect, the method is for enhancing communication in a system with a plurality of communication connections. In an embodiment, the communication connections are provided as electronic communication connections. The method comprises pre-computing a plurality of locally optimal configurations. In an embodiment, "locally optimal" is determined in respect of a given criterion. In an embodiment, the method comprises pre-computing parameters required to build such configurations. The method comprises storing in a memory data about, as the case may be, the configurations and/or the parameters. The method comprises processing such data to create time sharing information. In an embodiment the method comprises conveying such time sharing information to communication units. At least one effect of the method according to the invention in the first aspect is that such communication units may transmit at such times and such power levels as to achieve enhanced communication within the system according to some criterion such as the predetermined criterion. At least one effect of the method according to the invention in the first aspect according to the variant is that such communication units may transmit at such times and such power levels as to achieve enhanced communication within the system according to some criterion such as the pre-determined criterion.

An embodiment according to the invention in the first aspect further comprises re-computing a plurality of locally optimal configurations and parameters required to build such configurations when a new communication unit is added to the system.

An embodiment according to the invention in the first aspect further comprises pre-computing a plurality of locally optimal configurations and parameters required to build such configurations where the communication units have guaranteed data rates and the locally optimal configurations meet or exceed those guaranteed data rates.

An embodiment according to the invention in the first aspect further comprises receiving information that one or more communication units is inactive at a particular time. An embodiment according to the invention in the first aspect further comprises receiving information that one or more communication units is requires less than a guaranteed data rate at a particular time. In an embodiment receiving the information includes information that the one or more communication units is either inactive or requires less than a guaranteed data rate at a particular time.

In an embodiment according to the invention in the first aspect the communication units comprise transceivers. In an embodiment according to the invention in the first aspect the communication units further comprise remote terminals.

In a second aspect the invention encompasses a central unit to form part of a communication system operative to serve multiple electronic communication lines. The central unit comprises means for receiving electronic data related to receiver channel characteristics. In an embodiment the means for receiving electronic data related to channel characteristics is an electronic receiver or an electronic transceiver.

In an embodiment according to the invention in the second aspect the central unit comprises an optimizer adapted to operate an optimization routine to compute multiple locally optimal configurations. In an embodiment the optimizer is further configured to identify locally optimal configuration points needed to reach desired data rates. In an embodiment the central unit comprises a memory configured to store data representative and/or indicative of the locally optimal configurations and locally optimal configuration points.

In an embodiment according to the invention in the second aspect the central unit comprises means for computing a media access plan. In particular, the media access plan to achieve optimal system communication according to a criterion. In an embodiment the criterion is one of selected from the group consisting of (i) a rule for absolute fairness; (ii) a rule for relative fairness; and (iii) a rule for maximizing the sum of all data rates. In an embodiment the media access plan comprises information about time slots, about when transceivers should transmit, and/or about the power levels at which transceivers should transmit. In an embodiment according to the invention in the second aspect the means for computing a media access plan to achieve optimal system communication according to a criterion are a data processing module within the central unit.

In one embodiment the central unit comprises means for conveying the media access plan to transceivers that will transmit in accordance with the plan. In an embodiment the means for conveying the media access plan is an electronic transmitter or an electronic transceiver.

In an embodiment the memory is adapted to store information about data rates guaranteed to various communication units. In an embodiment the electronic data about receiver channel characteristics comprises data about when a communication unit is inactive and/or data about when a communication unit requires less than its guaranteed rate. In an embodiment the means for computing a media access plan further comprises means to calculate locally optimal configurations and locally optimal parameters when all communication units are served with their guaranteed rates. In an embodiment the means for computing media access plan further comprises means to calculate different combinations of locally optimal configurations when one or more communication units are either in active or require less than their guaranteed rates. In an embodiment said different combinations include time sharing information to provide higher than guaranteed rates to some communication units at a time when one or more other communication units either are inactive or require less than their guaranteed rates.

In an embodiment according to the invention in the second aspect the central unit is adapted to perform one or more of the steps of the method according to the invention in the first aspect.

At least one effect of the invention in the second aspect is that the central unit when used in a communication system enables efficient use of communication channel bandwidth.

In a third aspect the invention encompasses a system operative to serve multiple electronic communication lines. The system comprises a distribution point. The distribution point comprises a central unit. In an embodiment the distribution point comprises a plurality of transceivers. The system further comprises a plurality of line interfaces and a crosstalk channel. In an embodiment the system is configured to compute locally optimal communication configurations, store in memory data about said configurations, process said data into time sharing information, and to convey such time sharing information to the transceivers. In an embodiment such transceivers at a point later than the conveyance of time sharing information to the transceivers transmit in accordance with such time sharing information.

In a variant of the system according to the invention in the third aspect the invention encompasses a system operative to serve multiple electronic communication lines. The system comprises a distribution point, a plurality of line interfaces, a crosstalk channel and a plurality of remote terminals. In an embodiment the distribution point comprises a central unit and a plurality of transceivers. In an embodiment the system is configured to compute locally optimal communication configurations, store in memory data about said configurations, process said data into time sharing information, convey such time sharing information to the transceivers and the remote terminals. In an embodiment such transceivers and/or remote terminals later transmit in accordance with such time sharing information.

In an embodiment according to the invention in the third aspect one or more, and in a particular embodiment, each of said plurality of transceivers comprises a front end and a line driver. In an embodiment the front end comprises a digital front end and/or an analog front end. In an embodiment according to the invention in the third aspect the number of front ends in the system is more than one and less than the number of line interfaces.

In an embodiment according to the invention in the third aspect the system is configured to switch all communication transmissions between the locally optimal communication configurations. In an embodiment according to the invention in the third aspect the system is adapted so that in any locally optimal communication configuration, the number of active transmission connections is between zero and the number of front ends, inclusive.

In an embodiment according to the invention in the third aspect the system is a wireline communication system. In an embodiment according to the invention in the third aspect the system is a wireless communication system. In an embodiment according to the invention in the third aspect the system is a hybrid communication system. In particular, the hybrid system includes a wireline communication and a wireless communication.

In an embodiment according to the invention in the third aspect each remote terminal has a guaranteed data for transmit from the terminal or for reception to the terminal or for both transmit and reception. In an embodiment the system is configured to calculate locally optimal configurations where the system serves all the guaranteed data rates to and from all remote terminals. In an embodiment the system is configured to adapt the locally optimal configurations to serve some remote terminals with higher than guaranteed data rates, when others of the remote terminals either are inactive or require less than their guaranteed rates.

In an embodiment of the system according to the invention in the third aspect the system is adapted to perform the method according to the invention in the first aspect. In an embodiment of the system according to the invention in the third aspect the system includes at least one central unit according to the invention in the second aspect.

Various embodiments are not restricted or constrained by the physical channel on which data is conveyed. Therefore, various embodiments are applicable, while other embodiments are wireline, telephone or other wireline communication, and other embodiments are wireless.

Various embodiments are not restricted or constrained by the manner in which a system or owned or operated. Therefore, various embodiments may be entirely owned and operated by a single entity. A private MIMO system, whether wireline or wireless, is one non-limiting example of such an embodiment, but various embodiments may apply to any private communication system. Other embodiments may involve a split of ownership or operation, in which, for example, a server system (including central unit, transceivers, and crosstalk channel) are operated by one entity while remote terminals are operated by another entity. Such other embodiments, which may be wireline or wireless in all their forms, are described herein as they apply separately to the server on the one hand, and the remote terminals on the other hand.

The embodiments that are herein described, are by way of example only, with reference to the accompanying drawings. No attempt is made to show structural details in more detail than is necessary for a fundamental understanding. In the drawings:
FIG. 1 illustrates a multi-user transmission system;
FIG. 2 illustrates a region of reachable data rates and powers for two lines that have strong crosstalk;
FIG. 3 illustrates one embodiment of a region reachable data rates and powers for two lines that have strong crosstalk and communication time sharing;
FIG. 4 illustrates a region of reachable data rates and powers for two lines that have weak crosstalk;
FIG. 5 illustrates one embodiment of a region of reachable rates and powers in a general case with two lines;
FIG. 6A illustrates one embodiment of a system with messaging for channel characteristics;
FIG. 6B illustrates one embodiment of a system with messaging for transmitter configuration settings;
FIG. 6C illustrates one embodiment of a system with messaging for timing information;
FIG. 7 illustrates a block diagram of a TDMA system;
FIG. 8 illustrates a block diagram of a TDD system;
FIG. 9 illustrates one embodiment of a system with mixed access communication;
FIG. 10 illustrates one embodiment of a TDD system with additional interface between a digital frontend and an analog frontend;
FIG. 11 illustrates one embodiment of an allocation of time slots for uplink and downlink transmissions in a TDD system;
FIG. 12 illustrates one embodiment of an allocation of time slots for uplink and downlink transmissions in a mixed access system; and
FIG. 13 illustrates a flow diagram describing one embodiment of a method for a transceiver system pre-computing locally optimal configurations to enhance communication.
FIG. 14 illustrates a flow diagram describing one embodiment of a method for a transceiver system pre-computing locally optimal configurations to enhance communication.

In this description, the following symbols have the indicated meanings:
*Rᵢ* means "Rate on connection *i*".
R means "Vector of rates of all communication connections".
R*ₛₑₗ* means "Selected rate vector", typically the rate vector that maximizes system communication according to any of the three alternative optimization criteria, although other rate vectors may be selected.
R*ₜⱼ* means "Rate vector for time instance *j*".
*u*(**R**) means "Utility function", which the selected system-wide optimization factor.
*pᵢ* means "Transmit power on connection *i*".
*pₛₑₗ* means "Selected power vector", typically the power vector that will maximize system communication according to the selected optimization criterion, although other power vectors may be selected.
*tⱼ* means "Percentage of time where configuration parameter set *j* is used".
*wᵢ* means "Weighted sum-value weight value for connection *i*".

In this description, the following terms have the indicated meanings:
"Local optimization" is the process of finding transmission power levels for two communication units, and the corresponding data rate for each such unit. In local optimization, "locally optimal points" are the found power and data rate points, and the result is a "locally optimized configuration". Configurations may be computed for all rate allocations , and such configurations may be stored in communication units and in the central unit.

"Global optimization" is a process with two steps. First, local optimization is performed, as discussed above. Second, there may be provided in addition or in the alternative rapid switching between different multiple locally optimized configurations. This rapid switching allows an increase in the system performance over alternative embodiments by using the multiple locally optimized configuration. At any particular point in time, one such locally optimized configuration is being implemented. In "global optimization", there may be multiple local optimization configurations, and different local optimization configurations may be selected at different times in order to optimize communication performance at different points of time. Global optimization is implemented in various embodiments, which can improve the performance of the communication system..

"Dynamic rate adaptation" may be considered as a two step process. First, global optimization is performed, as discussed above. Second, as an alternative or in addition, an event happens to change the local optimizations. This creates a need to re-compute new local optimization configurations, using various algorithms which might include some kind of linear programming. The new local optimization configurations are then stored in communication units and in the central unit. Dynamic rate adaptation may be implemented in various embodiments, which may improve the performance of the communication system.

"Communication units" may include all any or all of the units that can act as receivers, or transmitters, or both. The central unit, the transceivers within the distribution point, and the remote terminals, may all be included within the term "communication units".

"Server side components" may be considered as the components of a system on the server side, including the central unit, the transceivers, and the crosstalk channel, but not including the remote terminals.

"Client side components" are all the components of a system on the client side, including the remote terminals and the part of the connection from the remote terminals to the crosstalk channel that is under the control of the operator or owner of the remote terminals. Client side components do not include server side components.

"Transceiver" may be considered a radio unit within a distribution point that is in communicative contact with a central unit, and which executes both electronic transmission and electronic reception. Electronic transmission may include wired and wireless transmission.

"Remote terminal" is a radio unit outside the distribution point. Although a remote terminal may be a transmitter, a receiver, or a transceiver, it is not referenced herein as a "transceiver", since the term "transceiver" applies to radio units within a distribution point.

"Wireline communication" includes communication by cable or wire, by a pair or greater number of telephony lines bound together, or by any other communication that includes communication by cable or wire. A "wireline" is a line that is cable, wireline telephony, or any other kind of wired structure for communication. A "wireline communication" or "wireline connection" is the path by which wireline communication occurs.

"Wireless communication" includes communication by wireless, which may be terrestrial or satellite, cellular or land mobile, microwave or sub-microwave, or any other kind of wireless communication. A "wireless communication" or "wireless connection" is the path by which wireless communication occurs.

"Hybrid communication system" is a system that includes at least one wireline connection between two or more communication units, and also at least one wireless connection between two or more communication units.

"Mixed access system" is a system that includes two or more types of channel access, which may be, for example, TDMA, FDMA, CDMA, SDMA, TDD, or FDD.

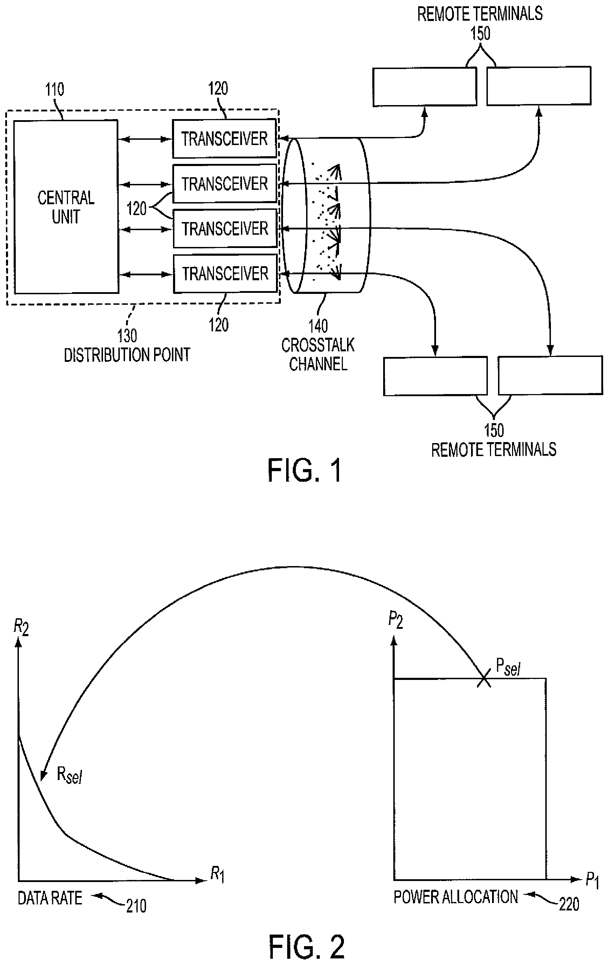

FIG. 1 illustrates a multi-user transmission system according to an alternative embodiment. The central unit 110 manages the system, communicating directly with transceivers 120. The central unit 110 and the transceivers 120 together make up a distribution point 130. The central unit 110 may transmit to or receive from the transceivers 120. The transceivers 120 may transmit to either the central unit 110 or through the crosstalk channel 140 to the remote terminals 150, in which case the transceivers 120 are acting as transmitters. The transceivers 120 may receive from either the central unit 110 or through the crosstalk channel 140 from the remote terminals 150, in which case the transceivers 120 are acting as receivers. The remote terminals 150 may transmit through the crosstalk channel 140 to the transceiver 120, in which case the remote terminals 150 are acting as transmitters, or the remote terminals 150 may receive from the transceivers 120 through the crosstalk channel 140, in which case the remote terminals 150 are acting as receivers.

An operation of an alternative system is shown in FIG. 2, which illustrates a region of reachable data rates and powers for two lines that have strong crosstalk, according to the alternative embodiments. The transmission system consists of several transmission lines with crosstalk between them. Every transceiver 120 or remote terminal 150 is able to adjust some parameter of the physical link, such as a transmit power between 0 and *p*_{*max*,} continuously or in discrete steps. There is a mapping between the possible power allocation 220 for each transmission lines, described by a power vector **p** for power levels P1 and P2 in FIG. 2, and the reachable data rate 210 for each of the of the links R, shown as R1 and R2 in FIG. 2. The shape of the area of reachable data rates, which is "the rate region", is defined by the capabilities of the transmission system and the transmission channel as shown in the concave curve in the data rate 210. The shape of the area of the reachable power levels is shown in the four-point box in the power allocation 220. FIG. 2 shows the power levels and data rates which have been selected by this system, in which Psel shows maximum power level to P2 and sub-maximum power level to P1, and which the corresponding data rate, Rsel, shows sub-maximum data rates for each of R1 and R2.

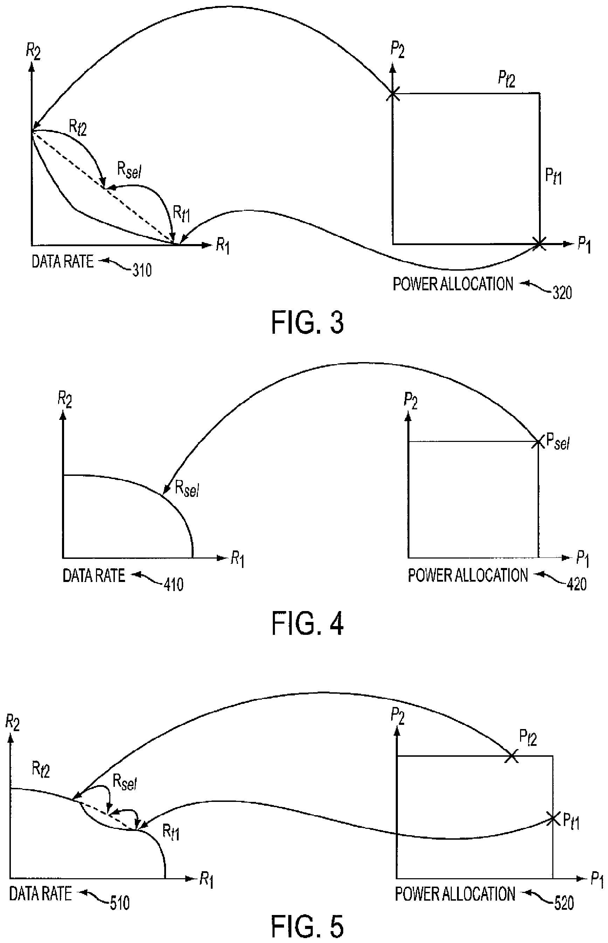

Turning now to the embodiments provided herein, FIG. 3 shows rates that may be achieved. FIG. 3 illustrates regions of reachable data rates and power levels for two lines that have strong cross talk. Power allocation 320 is shown at the right, and data rate 310 at the left. Again, the maximum achievable data rates are shown by the concave line in 310, and the maximum power rates are shown by the box in 320. Two pairs of points are shown, where P1 corresponds to Rt1, and P2 corresponds to Rt2. The first step, where locally optimal points are calculated, is shown in FIG. 3, where the configuration of full power to P1 and 0 power to P2 corresponds to maximum data rate for Rt1 and 0 data rate for Rt2, and 0 power to P1 and full power to P2 corresponds to 0 data rate for Rt1 and maximum data rate for Rt2.

FIG. 3 shows that the former constraint on data rates, which was represented by the concave line in 210 in FIG. 2, is exceeded in the embodiments of FIG. 3. The two optimal configurations tested are maximum power to P1 and 0 power to P2, and maximum power to P2 and 0 power to P1. By switching between these two optimal configurations, various embodiments can achieve maximum data rate for any unit that is transmitting at any particular time. Therefore, the rates reached by the optimal combinations are always equal or higher than the rates reached by the original configuration, Psel and Rsel, shown in the figure. This holds true also for practical cases of rate regions, as is shown in FIG. 5, explained below.

In one aspect, the system first calculates optimal points at setup. These are points at which only one of the links is active. The system does this for one or more, and alternatively each active link. The system then calculates locally optimal points for two or more active links. For every configuration, there is a rate vector R*ᵢ* = *f*(**p**). In one exemplary embodiment, **R₁** = *f*(*p*₁*,p*₂ = 0)*,* **R₂** = *f*(*p*₁ = 0,*p*₂) and **R₃** = *f(p*₁*,p*₂)*.* The power vectors achieving this points are **p**_{*t*1} = (*p*₁ = *p_{max,}p*₂ *=* 0), **p**_{*t*2} - (*p*₁ = 0*,p*₂ = *pₘₐₓ*) and **p**_{*t*3} = (*p*₁ = 0,*p*₂ = *pₘₐₓ*) In the example, pt3 is the same as pt2, so pt3 is ignored as a possible separate implementation. The achievable rates for any combination of the points are t₁**R**₁ + *t*₂**R**₂, where *t*₁ is the percentage of time where configuration 1 is used and *t*₂ is the percentage time where configuration 2 is used. The optimization of the two weights *t*₁*, t*₂ is solved by a linear program.

Embodiments illustrated in FIG. 3 may operate on any system, including, without limitation, any cable, wireline telephony, other wireline, wireless system, or hybrids of any of the aforementioned kinds of systems. Various embodiments are private systems in which all of the hardware components, both server side and client side, are owned and operated by a single entity. Various embodiments are private or public systems in which the server side components are owned and operated by a single entity, while the client side components are owned and operated by one or more different entities that do not own and operate the server side components. When there is a split between ownership and operation of the server side and client side components, the description herein related to various server side components and operations will apply only to the server side, and the description herein related to various client side components and operations will apply only to the client side.

FIG. 4 illustrates a region of reachable data rates and powers for two lines that have weak crosstalk, according to alternative embodiments. Power allocation 420 corresponds with data rate 410. Since the two lines have little or no crosstalk or other co-channel interference, power transmission may be maximized for both P1 and P2, shown as Psel in 420. This power transmission configuration corresponds to maximum data rate for both R1 and R2, shown as Rsel in 410. The lines essentially operate independently, because their transmissions do not affect one another. FIG. 4 shows a convex rate region, because there is little crosstalk between the two lines. Weighted sum-rate optimal points are achievable when every link is optimizing locally, while only the weights *wᵢ* of the links are coordinated from the central unit 110. Weighted sum-rate optimal algorithms like iterative water filling are able to reach the shown points.

FIG. 5 illustrates one embodiment of a region of reachable rates and powers in a general case with two lines. In this case, there is crosstalk between the two lines. Power allocation 520 corresponds with data rate 510. At one locally optimal point, power level Pt1 is maximum power to P1 and sub-maximum power P2, corresponding to point Rt1, which is sub-maximum data rate to both R1 and R2. In a second locally optimal point, power level Pt2 is maximum power to P2 and sub-maximum power to P1, corresponding to point Rt2, which is sub-maximum data rate to both R1 and R2. In various embodiments, multiple locally optimal points are stored in the memory of the communication units. Thus, global optimization may be achieved, thereby enhancing system performance. Performance may be enhanced in any system in which there are two or more communication lines, provided that at least two of such communication lines have strong crosstalk or other co-channel interference.

A system implementing various embodiments provided herein are capable of calculating the rates reached at points of interest in the transmission system. In the example shown in FIG. 3, to take only one instance, there are three possible configurations and two different locally optimal rates. Data related to configurations and rates is collected in the transceivers and remote terminals by proper link configuration, and then transmitted to the central unit. At system startup, at least one or typically each communication link checks the link quality for the case where all of the other links are quiet, and also checks link quality for the case where all the links are active. Optionally, other cases, where some of the links active, while others are not, may also be checked.

Given the data, locally optimized configurations are calculated by the central unit. If channel estimation data is also available, that data may also be sent to the central unit to calculate the rate points of interest from the estimation. When the system has many transmission links, additional sources of information, including estimation data, helps the central unit quickly calculate the locally optimized configurations.

Embodiments illustrated in FIG. 5 may operate on any system, including, without limitation, any cable, wireline telephony, other wireline, wireless system, or hybrids of any of the aforementioned kinds of systems. Various embodiments are private systems in which all of the hardware components, both server side and client side, are owned and operated by a single entity. Various embodiments are private or public systems in which the server side components are owned and operated by a single entity, while the client side components are owned and operated by one or more different entities that do not own and operate the server side components. When there is a split between ownership and operation of the server side and client side components, the description herein related to various server side components and operations will apply only to the server side, and the description herein related to various client side components and operations will apply only to the client side.

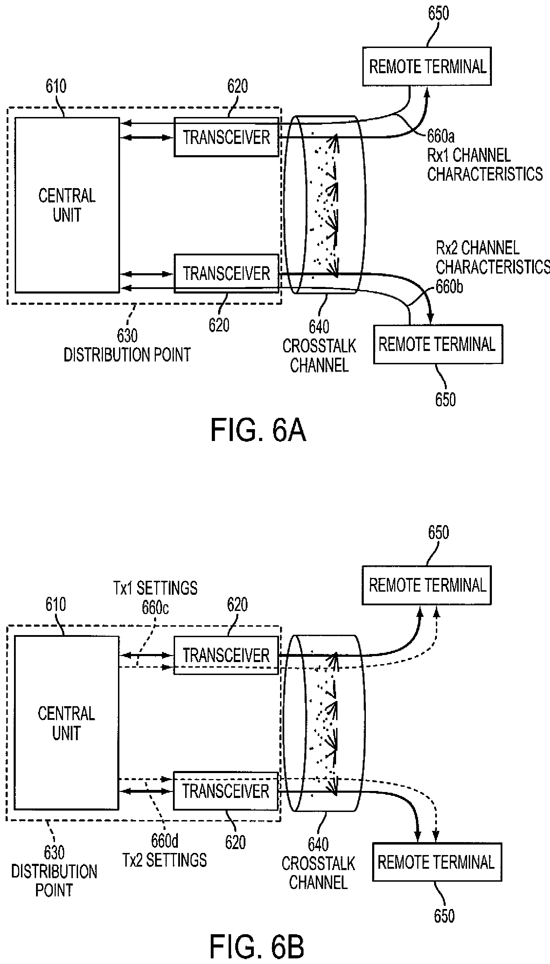

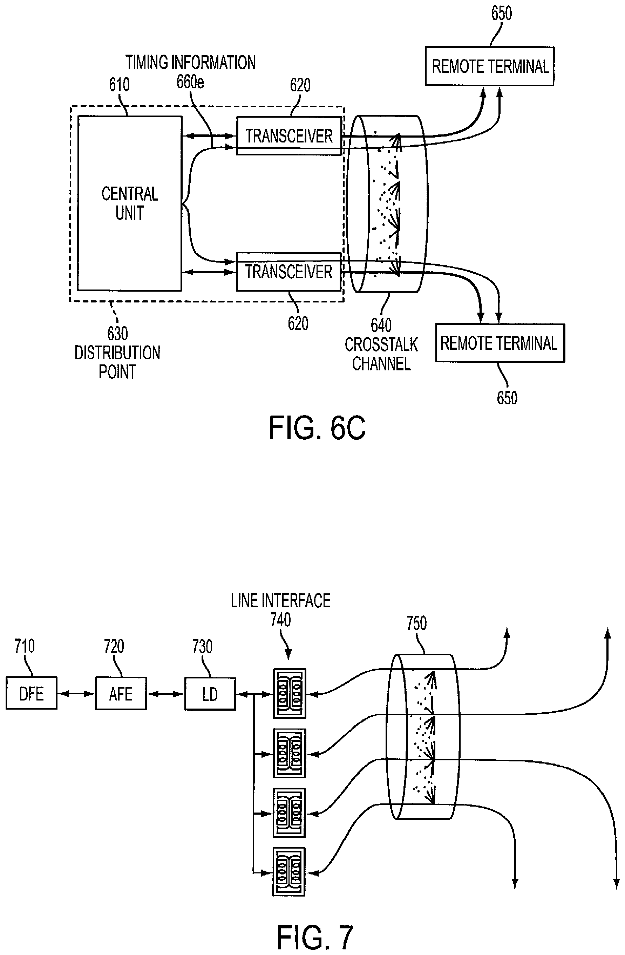

One embodiment of structure implementing these functions is set forth in figures FIG. 6A, FIG. 6B, and FIG. 6C. All of these figures include a central unit 610 calculating the locally optimized configurations, transceivers 620 transmitting and receiving various data or information as further described, a distribution point including both the central unit 610 and the transceivers 620, remote terminals 650 that communicate with the transceivers 620, a crosstalk channel 640 through which communication flows in both directions between the transceivers 620 and the remote terminals 650.

Although each of FIG. 6A, FIG. 6B, and FIG. 6C, shows only two transceivers 620, it will be understood that there may be three, four, or any other higher number of transceivers in the system. Although each of the three figures shows only two remote terminals 650, it will be understood that there may be three, four, or any other higher number of remote terminals in the system.

Computation of locally optimized configurations is performed in the central unit 610. The central unit 610 may have specific structure, called an "optimizer", which runs an optimization routine and identifies a subset of configuration points that is needed to reach the desired rates. For example, in FIG. 3, there are the two points where only one transmitter is using the full power, whereas the point of two transmitters active at the same time is not needed. Thus, in FIG. 3, the "subset of configuration points" needed to reach a desired rate is two. The number of points necessary to reach the optimal point is always lower or equal to the number of lines. The running of an optimization routine may occur in a specific an dedicated part of the central unit 610, or in a distributed processing system with central unit 610 which can run the routine but which is not dedicated to that task, or in a unit totally separate from the central unit 610 which then shares the results with the central unit 610, or in any other matter permitted and enabled by technology to receive and process electronic data.

FIG. 6A illustrates one embodiment of a system with messaging for channel characteristics. In FIG. 6A, receiver ("Rx") channel characteristics are communicated to the central unit 610. Rx1 channel characteristics 660a is the virtual channel on which channel characteristic data is communicated from each remote terminal 650 at the top through the crosstalk channel 640, to the top transceiver 620, then to the central unit 610. 660a is also the virtual channel by which top transceiver 620 communicates its own Rx channel characteristics to the central unit 610. "Virtual channel" means that this is the flow of data, although the data may or may not be running on one or more particular physical channels between the central unit 660 the top transceiver 620, through the crosstalk channel 640, then to the top remote terminal 650. Rx1 channel characteristics 660b is the virtual channel on which channel characteristic data is communicated from each remote terminal 650 at the bottom through the crosstalk channel 640, to the bottom transceiver 620, then to the central unit 610. 660a is also the virtual channel by which bottom transceiver 620 communicates its own Rx channel characteristics to the central unit 610. "Virtual channel" means that this is the flow of data, although the data may or may not be running on one or more particular physical channels between the central unit 660 the bottom transceiver 620, through the crosstalk channel 640, then to the bottom remote terminal 650.

The data communicated as part of the Rx channel characteristics may include any kind of data that impacts the desired reception of data at the various transceivers and remote terminals. It may include technical data, such as crosstalk between channels, electro-magnetic (EM) interference of any other kind that may affect reception, and any limitations on ability of the transceivers or remote terminals to receive data. It may include relevant customer data, since the anticipated quantity, required quality, and timing, of data to be received at a remote terminal, or the amount of compensation customers are prepared to pay for ensuring the reception of certain quantity, quality, or timing, of data.

After the central unit 610 has received Rx channel characteristic data from the transceivers and remote terminals, it computes locally optimal configurations, and communicates necessary data to the transceivers 620 and remote terminals 650. Such data will include at least transmitter configuration settings for any locally optimal configuration, which means at least the power levels of transmission for each of the transceivers 620 and remote terminals 650.

FIG. 6B illustrates one embodiment of system with messaging for transmitter configuration settings. As shown in FIG. 6B by the dotted line extending out from top of central unit 610, transmitter configuration settings are communicated on virtual channel 660c from the central unit 610, to top transceiver 620, through crosstalk channel 640, to remote terminal 650. As shown in FIG. 6b by the dotted line extending out from the bottom of central unit 610, transmitter configuration settings are communicated on virtual channel 660d from the bottom of central unit 610, to bottom transceiver 620, through crosstalk channel 640, to bottom remote terminal 650.

FIG. 6C illustrates one embodiment of a system with messaging for timing information. In FIG. 6C, two lines go out from the center of central unit 610. Each line shows the communication of timing information from the central unit 610. For the line at the top, timing information is sent on the top line directly to top transceiver 620 and also to top remote terminal 650 through top transceiver 620, crosstalk channel 640, and then to top remote terminal 650. For the line at the bottom, timing information is sent on the bottom line directly to bottom transceiver 620 and also to bottom remote terminal 650 through bottom transceiver 620, crosstalk channel 640, and then to bottom remote terminal 650. The lines go out from the same point of central unit 610 in order to illustrate, and emphasize, that all of the units, that is, all of the transceivers, and all of the remote terminals, receive coordinated timing information, in which the time slots are the same for all of the transmitting units, and each unit will transmit in accordance with the plan calculated by the central unit 610. Synchronization of transmission is typically required in order to optimize the performance of the communication system. With the Rx channel characteristic data in FIG. 6A, it is not necessarily required that all of the data be communicated at the same time to the central unit 610, and each unit, be it transceiver or remote terminal, may have its own unique Rx channel characteristics that differ from the characteristics of one or more other transceivers or remote terminals. Similarly, the transmitter configuration settings in FIG. 6B need not be communicated at the same time to the various transceivers and remote terminals, and each such transceiver or remote terminal may have its own unique transmitter configuration setting different from the settings of all the other transceivers and remote terminals.

In some embodiments, the timing configuration settings communicated in FIG. 6C need not be communicated to all of the transceivers and remote terminals at the same time. These are embodiments related to initial system set up, or where timing of a new setup is not critical. In other embodiments, the timing configuration settings are communicated substantially simultaneously or at the same time from the central unit 610 to the transceivers 620 and remote terminals 650. Substantially simultaneous or at the same time communication may be necessary in dynamic rate adaptation, in order to allow the system to very quickly calculate, store, and implement, new locally optimal configurations, in response to changing Rx channel characteristics, thus optimizing system performance in embodiments where speed of adaptation is important.

To be able switch between different configurations, the reference parameters of the configurations of interest are distributed to the transmitters and receivers of the system. Various embodiments include configuration messages which distribute the parameters, and which enable the transceivers and remote terminals to store multiple configurations locally. Additionally, the transceivers and remote terminals are synchronized, so that they switch to the desired configuration at the same time. This is particularly useful in embodiments that include dynamic rate adaptation.

A media access plan message contains the information about what configuration is to be used at which particular time. Any single transceiver or remote terminal does not need to receive and store all parameters of the system, but only the subset that are connected to that specific link. For example, a transceiver or remote terminal acting as transmitter 1 will receive information to use full power *pₘₐₓ* for time *t*₁ and to be quiet at *t*₂. A transceiver or remote terminal may be acting as receiver 1 at the same time, in which case it may need to know the same times *t*₁ and *t*₂, but would not need to know the transmit powers (because it is not transmitting at time 1). Receiver 1 may need to switch receiver settings according to the media access plan, but still would need know the transmit powers at a time when the unit is receiving rather than transmitting accordingly.

The transmitter and receiver configuration parameters may include pre-coding coefficients, bit loading, channel code settings, and other parameters.

Timing blocks, for transmission and reception, may be of a standard length, or may vary in length, as long as all each communication unit is aware of its part of the media access plan.

Transmitters with strong crosstalk will generally not transmit at the same time. Given two transmitters 1 and 2 with strong crosstalk, it is possible to allocate transmission time 50% to transmitter 1 and 50% to transmitter 2, but this is not particularly required, and a majority of time, in any percentage, may be allocate to the two transmitters, provided, of course, that the total transmission time of these two units does not exceed 100% of available time.

Embodiments illustrated in FIG. 6A, FIG. 6B, and FIG. 6C may operate on any system, including, without limitation, any cable, wireline telephony, other wireline, wireless system, or hybrids of any of the aforementioned kinds of systems. Various embodiments may be private systems in which all of the hardware components, both server side and client side, are owned and operated by a single entity. Various embodiments may be private or public systems in which the server side components are owned and operated by a single entity, while the client side components are owned and operated by one or more different entities that do not own and operate the server side components. When there is a split between ownership and operation of the server side and client side components, the embodiments provided herein may be related to various server side components and operations will apply only to the server side, and the embodiments herein related to various client side components and operations will apply only to the client side.

Advantages of the instant embodiments are afforded and are to be appreciated. A much greater degree of freedom for optimizing system settings may be afforded. Higher system performance is possible in systems that have two or more lines with strong crosstalk. Dynamic rate adaptation is further possible.

In addition, various embodiments allow the achievement of superior system performance, but with a reduced quantity of hardware. Reduction of hardware will reduce capital costs, may reduce operating costs (for leasing space, or for electricity costs, for example), and may reduce maintenance costs. One example of reducing hardware is that of reducing the number of transceivers at the distribution point. Power consumption is one of the limiting factors for high speed communication distribution points, and a major part of the overall power is consumed by the frontend electronics and line drivers. Therefore, in an aspect herein the embodiments advantageously reduce the number of frontcnds to a value less than the number of served lines.

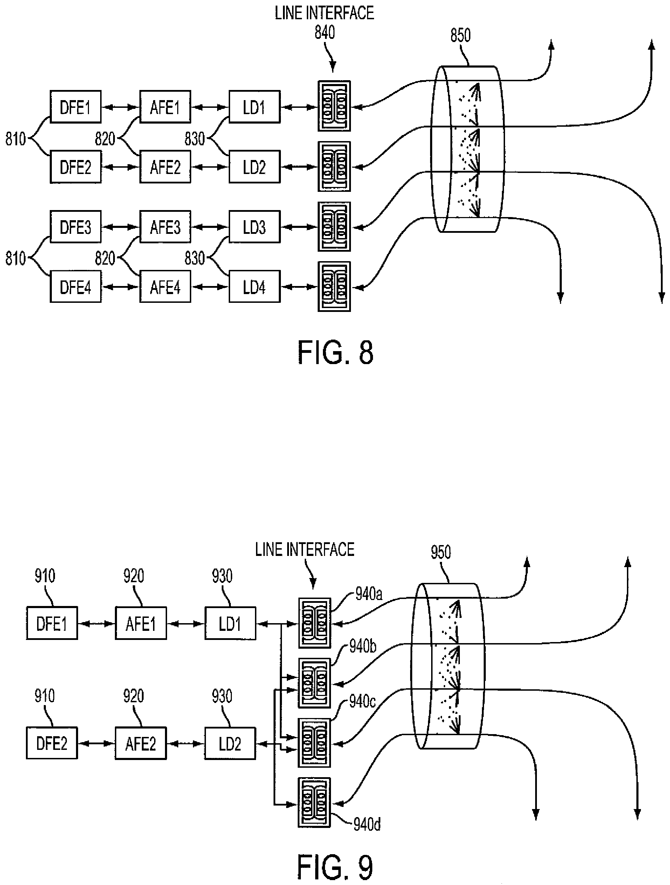

Two corner cases are the case of one transmitter for all lines. One corner case is shown in FIG. 7, which shows one transmitter for all lines. A second corner case is one transmitter per line, which is shown in FIG. 8, a block diagram of a alternative embodiments TDD system.

In various embodiments, there is an intermediate case between TDMA and TDD, which is a mixed access system, as shown in FIG. 9, which is just one example of very many kinds of mixed access systems that may be implemented in various embodiments.

A goal is to allow various described optimization routines to find configurations that serve all lines according to the quality defined by the optimization criterion. At the same time, the quantity of hardware is to be reduced.

FIG. 7 is a block diagram of a TDMA system to illustrate the efficacy of the instant embodiments. The term "DFE" 710 refers to the digital front-end, "AFE" 720 refers to the analog front-end, and "LD" 730 is a line driver. There is a line interface 740, which handles decoupling between line driver 730 and transmission line, impedance matching, and line termination. Also shown is a crosstalk channel 750, through which flows communication to and from remote terminals that are not shown. FIG. 8 is an example of a standard TDMA system.

FIG. 8 is a block diagram of a TDD system to illustrate the efficacy of the instant embodiments. DFE 810 communicates with AFE 820, which communicates with LD 830, which communicates with line interface 840, which communicates through crosstalk channel 850 with remote terminals not shown. Each communication chain is essentially separate. In FIG. 9, four chains are shown, marked 1, 2, 3, and 4, each chain including a DFE, an AFE, and LD, a line interface, and the crosstalk channel. This standard TDD system will work, but it requires a very heavy amount of hardware.

FIG. 9 illustrates one embodiment of a system with mixed access communication that has certain features of a TDMA system and certain features of a TDD system. This is a system with reduced complexity, and hence reduced hardware, with regard to alternative embodiments systems. Multiple connections may share one communication chain of a DFE, an AFE, and an LD. In order to do this, there may be stored, possibly at the DFE, but potentially at either the AFE or at the central unit to which the DFE is connected, multiple local optimized configurations and parameters for such configurations.

In one embodiment presented in FIG. 9, there are two communication chains, 1 and 2, in which each chain includes a DFE 910, an AFE 910, and an LD 830. The two chains may act independently. In this embodiment, the two chains can service four line interfaces to four remote terminals not shown (or to four groups of remote terminals, not shown). In this embodiment, one possible variation, not shown, would be to have each of the communication chains connect physically to each of the four line interfaces 940a, 940b, 940c, and 940d. Such a variation would work, but it would require more connections than is necessary.

The variation of a first embodiment shown in FIG. 9 shows only three connections between each communication chain and the line interfaces 940. Chain 1 is connected to line interfaces 940a, 940b, and 940c, but not to 940d. Chain 2 is connected to line interfaces 940b, 940c, and 940d, but not to 940a. The overall goal is to ensure that no two lines having strong crosstalk will be permitted to transmit at the same time, while reducing the number of active links. For this purpose, the variation shown is sufficient. If the crosstalk is between 940a and 940b, both lines may transmit at the same time, provided that 940a transmits with chain 1, and 940b transmits with chain 2. Similarly, if 940a and 940c have strong crosstalk, 940a may transmit with chain 1, and 940c may transmit with chain 2. Similarly, if 940a and 940d have strong crosstalk, 940a may transmit with chain 1, and 940d may transmit with chain 2. If 940b and 940c have strong crosstalk, they may both transmit at the same time, provided either one is transmitting on chain 1 and the other one is transmitting on chain 2. If 940b and 940d have strong crosstalk, 940b may transmit with chain 1 and 940d may transmit with chain 2. If 940c and 940d have strong crosstalk, 940c may transmit with chain 1 and 940d may transmit with chain 2.

With four line interfaces as shown, the system will work successfully by employing two communication chains and three connections between the chains and the line interfaces. Mathematically, with two communication chains, the minimum number of connections that may be required between the chains and the line interfaces, for the system to operate in the way described, is the number of line interfaces minus one. This number of line interfaces minus one, reduces the number of connections, hence the complexity of the system, and the cost, to a minimum.

Embodiments illustrated in FIG. 9 may operate on any system, including, without limitation, any cable, wireline telephony, other wireline, wireless system, or hybrids of any of the aforementioned kinds of systems. Various embodiments may be private systems in which all of the hardware components, both server side and client side, are owned and operated by a single entity. Various embodiments may further be private or public systems in which the server side components are owned and operated by a single entity, while the client side components are owned and operated by one or more different entities that do not own and operate the server side components. When there is a split between ownership and operation of the server side and client side components, the embodiments provided herein relate to various server side components and operations will apply only to the server side, and the embodiments herein relate to various client side components and operations will apply only to the client side.

Various embodiments operate in "single duplex mode", which means that the uplink and downlink transmissions are on the same channel, but in different time slots. In such a mode, communication units, also operating in single duple, transmit at any one time in either uplink or downlink. To reduce hardware complexity and cost, parts of the communication unit hardware are shared for uplink and downlink transmission. Although sharing reduces complexity and cost, it also has a disadvantage in that turnaround time is required to switch between uplink and downlink, and vice versa. Turnaround time reduces the rate efficiency.

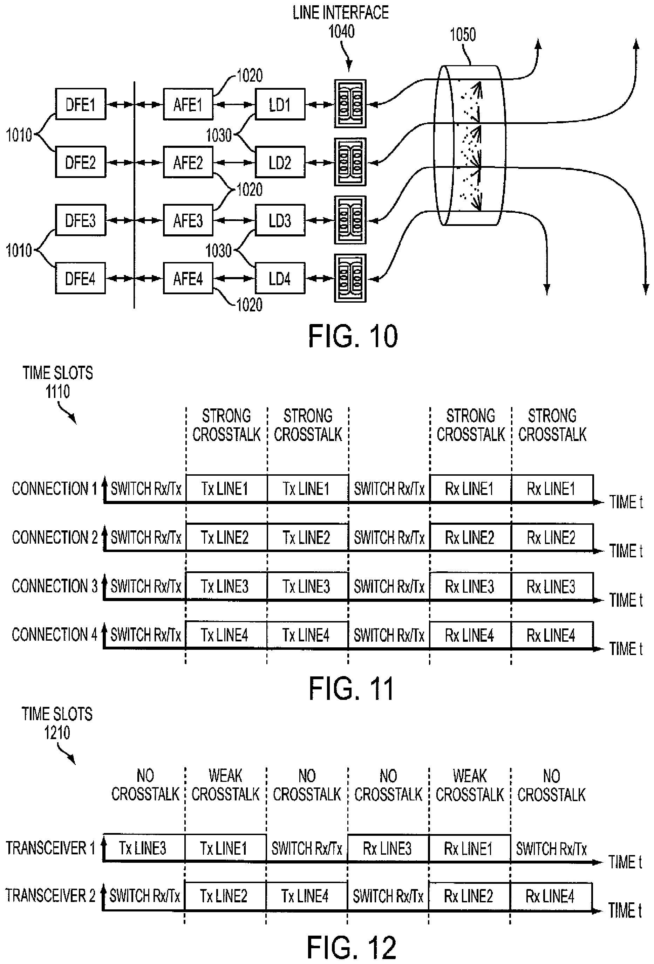

It is possible to reduce the overhead due to this switching time. This may be done by the addition of a bus system between the DFEs and the AFEs, as shown in FIG. 10. FIG. 10 illustrates one embodiment of a TDD system with an additional interface between a digital frontend and an analog frontend. FIG. 10 is a block diagram of a TDD system with the addition of a bus system interface between the DFEs and the AFEs. In FIG. 10, there are four communication chains, each chain including a DFE 1010, an AFE 1020, and LD 1030, a line interface 1040, and the crosstalk channel 1050 connecting to one or a group of remote terminals, not shown. There is now a bus system, shown at the left, between the DFEs and the AFEs. One advantage of this system is that transmitting switches between different configurations in different time slots, and not all the transmitters are active in every time slot, similar to what is illustrated in FIG. 3. One benefit of this system in FIG. 10 is that time slots may be arranged such that where a chain is not required to transmit during a particular time slot, the chain may switch from transmit to receive (or vice versa) during that time slot. Doing this with multiple front ends, where not all the front ends are actively transmitting at the same time, is beneficial. Such benefit is enhanced where the system can insure, by way of a bus system, that at any time slot at least some of the DFEs may be switching their mode, while other DFEs can operate to make sure that all transmissions are occurring in accordance with media access plan.

There are additional advantages of the bus system of the bus system interface. With this interface, any communication chain, such as chain 1, can use any of the DFEs, such as DFE2, or DFE3, or DFE4, as shown. If DFE1 is out of service, for maintenance or for any other reason, the remainder of the chain, AFE1 and LD1, may be served by any of the other DFEs, provided that the DFE in use has in memory (or has access to the memory of the central unit or another piece of hardware) all necessary information about locally optimized configurations and their parameters. If system activity is low, a particular DFE is not necessarily required and is therefore inactive. In such case, one of the other DFEs can interface with its own chain and with the chain of the inactive DFE. All of these various embodiments are suggested by the cross-bar system shown in FIG. 10.

Embodiments illustrated in FIG. 10 may operate on any system, including, without limitation, any cable, wireline telephony, other wireline, wireless system, or hybrids of any of the aforementioned kinds of systems. Various embodiments are private systems in which all of the hardware components, both server side and client side, are owned and operated by a single entity. Various embodiments are private or public systems in which the server side components are owned and operated by a single entity, while the client side components are owned and operated by one or more different entities that do not own and operate the server side components. When there is a split between ownership and operation of the server side and client side components, the embodiments herein relate to various server side components and operations will apply only to the server side, and the embodiments herein relate to various client side components and operations will apply only to the client side.

The system of time slots associated with the structure illustrated in the embodiment of FIG. 10, is illustrated in the FIG. 11 and FIG. 12. FIG. 11 is an illustration of a possible allocation of time slots 1110 for uplink and downlink transmission in TDD system, according to the alternative embodiments. FIG. 12 is an illustration, according to various embodiments, of a possible allocation of time slots 1210 for uplink and downlink transmission in a mixed access system.

FIG. 11 illustrates one embodiment of an allocation of time slots for uplink and downlink transmissions in a TDD system, according to the alternative embodiments. In FIG. 11, there are time slots in which all the lines do downlink transmission and the distribution point transceivers are in the transmit ("Tx") mode. There is then a switching time for all the lines. After the switching time, all the lines have switched to uplink, and the distribution point is in receive ("Rx") mode. Although various lines have strong crosstalk, this is not a problem, because each line has its own connections, which means that each line has its own communication chain. This would be like showing FIG. 10 minus the bus system interface.

FIG. 12 illustrates one embodiment of an allocation of time slots for uplink and downlink transmissions in a mixed access system. FIG. 12 shows to time slotting when the bus system interface is in place and active. FIG. 12 therefore shows various embodiments. For FIG. 12, assume a channel with four lines, where lines 1 and 2 experience only weak crosstalk, while lines 3 and 4 experience strong crosstalk. Assume further a setup with reduced hardware complexity and two transceivers, such as is shown in FIG. 9. The optimization routine will switch to a configuration where line 1 and line 2 are served in the same time slot, as there is only weak crosstalk. Line 3 transmission is served in another time slot than the transmissions of line 1 and line 2, and line 4 transmission is served in another time slot different from the transmission time slots for either line 3 or for lines 1 and 2. As shown in FIG. 12, there are time slots where only one transmitter may be needed, and in such time slots, the other communication unit may switch from transmit to receive configuration, or vice versa. If there is a bus system addition, as suggested, then one DFE can enable all the transmissions shown in FIG. 12, which means that another DFE can be in switch mode, and there will not be any effect on the effective communication rate of the entire system.

One of the general concepts shown in FIG. 12 is that crosstalk is reduced by managing the transmissions such that lines with strong crosstalk do not carry transmissions in the same time slot. This concept is implemented and enabled by any number of possible system structures. One such system structure is illustrated in FIG. 9, as discussed. The concept may also be implemented and enabled by the structure illustrated in FIG. 10. FIG. 10 has greater hardware complexity than FIG. 9, but it has greater potential flexibility and greater potential data rate bandwidth than FIG. 9, for two reasons. First, FIG. 10 has four communication chains rather than the two chains shown in FIG. 9, so more transmissions can be made in any time slot with the system illustrated in FIG. 10. Second, the bus system interface illustrated in FIG. 10 has a bus system interface, which does not appear in FIG. 9. Therefore, all of the advantage of a bus system interface, such as, for example, enhanced flexibility, backup, greater communication throughput, as discussed above in regard to FIG. 10, will also apply to an infrastructure such as illustrated in FIG. 10, implementing an allocation of time slots as illustrated in FIG. 12.

Further, the illustrative embodiment presented in FIG. 9 does not necessarily include a bus system interface connecting DFE 1, DFE2, AFE 1, and AFE2. However, in an alternative embodiment, not shown in FIG. 9, there would be added such a bus system interface connecting all of the digital front ends and all of the analog front ends. Then, in addition to all of the features and advantages derived from the structure shown in FIG. 9, the alternative embodiment would also offer all the advantages of a bus system interface, such as greater flexibility, backup, and enhanced communication throughput, could be afforded in this alternative embodiment.

An additional embodiment, not shown but possible, would be to add to FIG. 10 a different network of connections between the line drivers 1030 and the line interfaces 1040. In FIG. 10, the line driver 1030 of each communication chain is connected to only one line interface 1040. This network of connections could be extended, so that each line driver is connected to three line interfaces. This extended network of connections, added to the structure illustrated in FIG. 10, could then be used to derive advantages and benefits of discussed above with regard to FIG. 9. In particular, the overall goal is to ensure that no two lines having strong crosstalk will be permitted to transmit at the same time, while reducing the number of active links. That would be achieved by this extended network of connections between the line drivers 1030 and the line interfaces 1040, in which each line driver is connected to three line interfaces.

Embodiments illustrated in FIG. 12 may operate on any system, including, without limitation, any cable, wireline telephony, other wireline, wireless system, or hybrids of any of the aforementioned kinds of systems. Various embodiments may include private systems in which all of the hardware components, both server side and client side, are owned and operated by a single entity. Various embodiments may include private or public systems in which the server side components are owned and operated by a single entity, while the client side components are owned and operated by one or more different entities that do not own and operate the server side components. When there is a split between ownership and operation of the server side and client side components, the embodiments herein relate to various server side components and operations will apply only to the server side, and the embodiments herein relate to various client side components and operations will apply only to the client side.

Various embodiments include dynamic rate adaptation to the changing needs or capabilities of receivers. For most of the time, only a few connections of a communication system request high bit rates. Alternative embodiments systems, such as VDSL, transmit idle data on inactive links. In such alternative embodiments systems, system-wide optimization is not used because of the complex optimization problem that must be solved in real time, and because the optimal configuration may already be obsolete by the time the optimization routine has finished.

In contrast, some of the embodiments herein may adapt to the requested bit rates very efficiently by changing the time allocation for configuration vectors that have already been calculated. In some embodiments an optimal configuration for the proposed system setup may be computed by solving a linear program, which does not require much time or compute resources. In some embodiments, a dynamic rate adaption for the proposed system is implemented as follows, but not necessarily in this order:
The configurations for all rate allocations of interest are computed and stored in the communication units.

The achieved rates of all configurations are available at the central unit.

Whenever the requested data rates change, the optimal configuration is computed substantially real time, by solving the linear program

The new allocation is distributed in substantially real time to the communication units.

In some embodiments, the system operator may use different optimization criteria for the allocation of worst case data rates, or for the additional data rate that is available when not all links need the full rate. Therefore, the optimization for the additional data rate uses a difference rate region where *R_{Difference i}* = *Rᵢ* - *R_{worsfcase i}.*

The dynamic rate adaption may also be used in the proposed reduced complexity transceiver system illustrated in FIG. 9.

Embodiments related to dynamic rate adaptation may operate on any system, including, without limitation, any cable, wireline telephony, other wireline, wireless system, or hybrids of any of the aforementioned kinds of systems. Various embodiments may include private systems in which all of the hardware components, both server side and client side, are owned and operated by a single entity. Various embodiments may include private or public systems in which the server side components are owned and operated by a single entity, while the client side components are owned and operated by one or more different entities that do not own and operate the server side components. When there is a split between ownership and operation of the server side and client side components, the embodiments herein relate to various server side components and operations will apply only to the server side, and the embodiments herein relate to various client side components and operations will apply only to the client side.

One embodiment is a transceiver system that services multiple electronic communication lines. This embodiment includes a distribution point, which itself may include a central unit and multiple transceivers. This embodiment also may include multiple line interfaces, a crosstalk channel, and multiple remote terminals. In this embodiment, the system may be configured to compute locally optimal communication configurations, store in memory data about said configurations, process said data into time sharing information, convey such time sharing information to the transceivers and the remote terminals. The time sharing information is later used by the transceivers and remote terminals to transmit in accordance with such time sharing information.

One exemplary embodiment is the transceiver system just described that services multiple electronic communication lines, wherein each of the multiple transceivers includes a front end and a line driver, and where the front end includes both a digital front end and an analog front end.

One exemplary embodiment is the transceiver system described above, including the front end and line driver, wherein the number of front ends in the system is more than one and less than the number of line interfaces.

One exemplary embodiment is the transceiver system described above, including the front end the line driver, where the number of front ends is as described above, and wherein the system is configured to switch all communication transmissions between the locally optimal communication configurations.

One exemplary embodiment is the transceiver system described above, including the front end and the line driver, where the number of front end is as described above, where the system is configured to switch transmissions as described above, and wherein in any locally optimal communication configuration, the number of active transmission connections is between 0 and the number of front ends, inclusive.

One exemplary embodiment is the transceiver system described above, including the front end and the line driver, where the number of front end is as described above, where the system is configured to switch transmissions as described above, where the number of active transmission connections is as described above, and wherein the system is a wireline communication system.

One exemplary embodiment is the transceiver system described above, including the front end and the line driver, where the number of front end is as described above, where the system is configured to switch transmissions as described above, where the number of active transmission connections is as described above, and wherein the system is a wireless communication system.

One exemplary embodiment is the transceiver system described above, including the front end and the line driver, where the number of front end is as described above, where the system is configured to switch transmissions as described above, where the number of active transmission connections is as described above, and wherein the system is a hybrid communication system.

One exemplary embodiment is the transceiver system that services multiple electronic communication lines, described above, wherein each remote terminal has a guaranteed data for transmit from the terminal or for reception to the terminal or for both transmit and reception. In this embodiment, the system is configured to calculate locally optimal configurations where the system serves all the guaranteed data rates to and from all remote terminals, and the system is also configured to adapt the locally optimal configurations to server some remote terminals with higher than guaranteed data rates, when others of the remote terminals either are inactive or require less than their guaranteed rates.

One exemplary embodiment is the transceiver system described above, including the guaranteed rate as described, including configuration to calculate and adapt to locally optimal configurations described above, wherein each of the multiple transceivers includes a front end and a line driver, and wherein each front end includes a digital front end and an analog front end.

One exemplary embodiment is the transceiver system described above, including the guaranteed rate as described and the configurations to calculate and adapt to locally optimal configurations, including the multiple transceivers as described above, wherein the number of front ends in the system is more than one and less than the number of line interfaces.

One exemplary embodiment is the transceiver system described above, including the guaranteed rate as described and the configurations to calculate and adapt to locally optimal configurations, including the multiple transceivers as described above, where the number of front ends in the system is more than one and less than the number of line interfaces, and wherein the system is configured to switch all communication transmissions between the locally optimal communication configurations.

One exemplary embodiment is the transceiver system described above, including the guaranteed rate as described and the configurations to calculate and adapt to locally optimal configurations, including the multiple transceivers as described above, where the number of front ends in the system is more than one and less than the number of line interfaces, where the system is configured to switch communication transmissions as described, and wherein in any locally optimal communication configuration, the number of active transmission connections is between 0 and the number of front ends, inclusive.

One exemplary embodiment is the transceiver system described above, including the guaranteed rate as described and the configurations to calculate and adapt to locally optimal configurations, including the multiple transceivers as described above, where the number of front ends in the system is more than one and less than the number of line interfaces, where the system is configured to switch communication transmissions as described, where the number of active transmission connections is as described above, and wherein the system is a wireline communication system.

One exemplary embodiment is the transceiver system described above, including the guaranteed rate as described and the configurations to calculate and adapt to locally optimal configurations, including the multiple transceivers as described above, where the number of front ends in the system is more than one and less than the number of line interfaces, where the system is configured to switch communication transmissions as described, where the number of active transmission connections is as described above, and wherein the system is a wireless communication system.

One exemplary embodiment is the transceiver system described above, including the guaranteed rate as described and the configurations to calculate and adapt to locally optimal configurations, including the multiple transceivers as described above, where the number of front ends in the system is more than one and less than the number of line interfaces, where the system is configured to switch communication transmissions as described, where the number of active transmission connections is as described above, and wherein the system is a hybrid communication system.

One exemplary embodiment is a system operative to serve multiple electronic communication lines. This embodiment may also include a distribution point, which itself includes a central unit and multiple transceivers. This embodiment may also include multiple line interfaces, and a crosstalk channel. In this embodiment, the system is configured to compute locally optimal communication configurations, store in memory data about said configurations, process said data into time sharing information, convey such time sharing information to the transceivers. The time sharing information is later used by the transceivers to transmit in accordance with such time sharing information.

One exemplary embodiment is the transceiver system just described that services multiple electronic communication lines with a central unit, multiple transceivers, multiple line interfaces, and a crosstalk channel, wherein each of the multiple transceivers includes a front end and a line driver, and where the front end includes both a digital front end and an analog front end.

One exemplary embodiment is the transceiver system described above with a central unit, multiple transceivers, multiple line interfaces, and a crosstalk channel, including the front end and line driver, wherein the number of front ends in the system is more than one and less than the number of line interfaces.

One exemplary embodiment is the transceiver system described above with a central unit, multiple transceivers, multiple line interfaces, and a crosstalk channel, including the front end the line driver, where the number of front ends is as described above, and wherein the system is configured to switch all communication transmissions between the locally optimal communication configurations.

One exemplary embodiment is the transceiver system described above with a central unit, multiple transceivers, multiple line interfaces, and a crosstalk channel, including the front end and the line driver, where the number of front end is as described above, where the system is configured to switch transmissions as described above, and wherein in any locally optimal communication configuration, the number of active transmission connections is between 0 and the number of front ends, inclusive.

One exemplary embodiment is the transceiver system described above with a central unit, multiple transceivers, multiple line interfaces, and a crosstalk channel, including the front end and the line driver, where the number of front end is as described above, where the system is configured to switch transmissions as described above, where the number of active transmission connections is as described above, and wherein the system is a wireline communication system.

One exemplary embodiment is the transceiver system described above lines a central unit, multiple transceivers, multiple line interfaces, and a crosstalk channel, including the front end and the line driver, where the number of front end is as described above, where the system is configured to switch transmissions as described above, where the number of active transmission connections is as described above, and wherein the system is a wireless communication system.

One exemplary embodiment is the transceiver system described above with a central unit, multiple transceivers, multiple line interfaces, and a crosstalk channel, including the front end and the line driver, where the number of front end is as described above, where the system is configured to switch transmissions as described above, where the number of active transmission connections is as described above, and wherein the system is a hybrid communication system.

One exemplary embodiment is a central unit that may be part of a communication system operative to serve multiple electronic communication lines. The central unit may include a unit that receives electronic data related to receiver channel characteristics, an optimizer that operates an optimization routine to compute multiple locally optimal configurations and to identify locally optimal configuration points needed to reach desired data rates, a memory to store the locally optimal configurations and locally optimal configuration points, a unit that computes a media access plan to achieve optimal system communication according to a criterion, and a unit that conveys the media access plan to transceivers that will transmit in accordance with the plan.

One exemplary embodiment is the central unit that may be part of a communication system operative to serve multiple electronic communication lines, wherein the a unit that receives electronic data related to channel characteristics is an electronic receiver or an electronic transceiver.

One exemplary embodiment is the central unit that may be part of a communication system operative to serve multiple electronic communication lines, wherein the a unit that conveys the media access plan is an electronic transmitter or an electronic transceiver.

One exemplary embodiment is the central unit that may be part of a communication system operative to serve multiple electronic communication lines, wherein the media access plan includes information about time slots, about when transceivers should transmit, and about the power levels at which transceivers should transmit.

One exemplary embodiment is the central unit that may be part of a communication system operative to serve multiple electronic communication lines, wherein the a unit that computes a media access plan to achieve optimal system communication according to a criterion are a data processing module within the central unit.

One exemplary embodiment is the central unit that may be part of a communication system operative to serve multiple electronic communication lines, including the data processing module described above, wherein the criterion is one of selected from the group consisting of (i) a rule for absolute fairness; (ii) a rule for relative fairness; and (iii) a rule for maximizing the sum of all data rates.

One exemplary embodiment is the central unit that may be part of a communication system operative to serve multiple electronic communication lines, wherein the memory also stores information about data rates guaranteed to various communication units, the electronic data about receiver channel characteristics comprises data about when a communication unit is in active and data about when a communication unit requires less than its guaranteed rate, the a unit that computes a media access plan further comprises a unit to calculate locally optimal configurations and locally optimal parameters when all communication units are served with their guaranteed rates, and the a unit that computes media access plan further comprises a unit to calculate different combinations of locally optimal configurations when one or more communication units are either in active or require less than their guaranteed rates. In this aspect, the different combinations include time sharing information that will provide higher than guaranteed rates to some communication units at a time when one or more other communication units either are inactive or require less than their guaranteed rates.

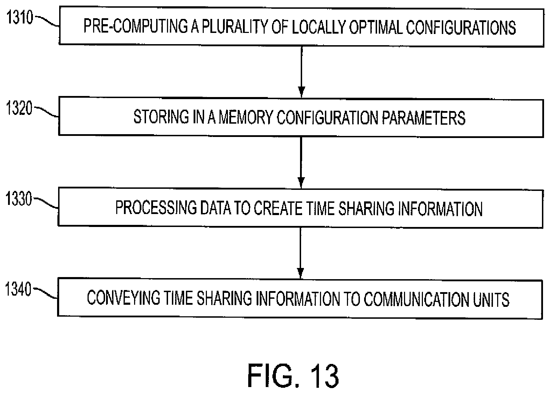

FIG. 13 illustrates a flow diagram describing one embodiment of a method for a transceiver system pre-computing locally optimal configurations to enhance communication. In step 1310, pre-computing multiple locally optimal configurations. In step 1320, storing in memory the multiple locally optimal configurations and configuration parameters. In step 1330, processing the locally optimal configurations and configuration parameters data, to create time sharing information. In step 1340, conveying the time sharing information to communication units.

In one exemplary embodiment, time sharing information that may be conveyed by the central unit to communication units, and is then used by the communication units to transmit according to the media access plan.

Embodiments illustrated in FIG. 13 may operate on any system, including, without limitation, any cable, wireline telephony, other wireline, wireless system, or hybrids of any of the aforementioned kinds of systems. Various embodiments may include private systems in which all of the hardware components, both server side and client side, are owned and operated by a single entity. Various embodiments may include private or public systems in which the server side components are owned and operated by a single entity, while the client side components are owned and operated by one or more different entities that do not own and operate the server side components. When there is a split between ownership and operation of the server side and client side components, the embodiments herein relate to various server side components and operations will apply only to the server side, and the embodiments herein relate to various client side components and operations will apply only to the client side.

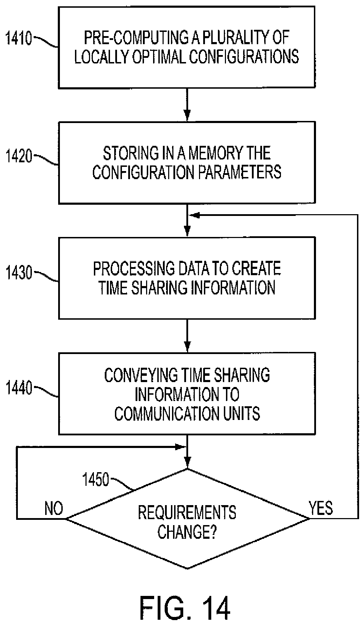

FIG. 14 illustrates a flow diagram describing a embodiment of a method for a transceiver system pre-computing locally optimal configurations to enhance communication, in which the method may include additionally or in the alternative a dynamic rate adaptation, based on a change in the data rate requirements of one or more communication units which, at a particular point of time, are either inactive or require less than their guaranteed data rate. In step 1410, pre-computing multiple locally optimal configurations. In step 1420, storing in a memory the multiple locally optimal configurations and configuration parameters. In step 1430, processing the locally optimal configurations and configuration parameters data, to create time sharing information. In step 1440, conveying the time sharing information to communication units. In step 1450, the system inquires as to whether the requirements of the communication units have changed, either permanently or temporarily (where "temporarily" may mean for one a single time slot, or for a longer period of time). If the answer is "NO", the requirements have not changed, then nothing more is done. If the answer is "YES", the requirements have changed, then the additional data is processed in step 1430, and new time sharing information is conveyed in step 1440, all as shown in FIG. 14. The system may also be programmed so that a separate system inquiry is not required, but rather the communication units will report automatically changes in requirements, or the communication units will automatically report their status according to some time schedule.

Embodiments illustrated in FIG. 14 may operate on any system, including, without limitation, any cable, wireline telephony, other wireline, wireless system, or hybrids of any of the aforementioned kinds of systems. Various embodiments may include private systems in which all of the hardware components, both server side and client side, are owned and operated by a single entity. Various embodiments may include private or public systems in which the server side components are owned and operated by a single entity, while the client side components are owned and operated by one or more different entities that do not own and operate the server side components. When there is a split between ownership and operation of the server side and client side components, the embodiments herein relate to various server side components and operations will apply only to the server side, and the embodiments herein relate to various client side components and operations will apply only to the client side.

One exemplary embodiment is a method for enhancing communication in a system with a plurality of electronic communication connections. Multiple locally optimal configurations and parameters that may be required to build such configurations are pre-computed. Data about the configurations and the parameters are then stored in a memory. Such data is then processed to create time sharing information. Such time sharing information is then conveyed to communication units so that such communication units may transmit at such times and such power levels as to achieve enhanced communication within the system according to some criterion.

The method just described for enhancing communication in a system with a plurality of electronic communication connections, wherein multiple locally optimal configurations and parameters that may be required to build such configurations are recomputed when a new communication unit is added to the system.

The method described for enhancing communication in a system with a plurality of electronic communication connections, wherein there are pre-computed multiple locally optimal configurations and parameters that may be required to build such configurations where the communication units have guaranteed data rates and the locally optimal configurations meet or exceed those guaranteed data rates.

The method for enhancing communication in a system with a plurality of electronic communication connections, including pre-computing with guaranteed data rates as described, wherein information is received that that one or more communication units is either inactive at a particular time is requires less than a guaranteed data rate at a particular time, and such information about units inactive or requiring less than guaranteed data rates is used to re-calculate a combination of configurations that will server the other units at higher than guaranteed data rates.

The method for enhancing communication in a system with a plurality of electronic communication connections, including pre-computing with guaranteed data rates as described, and including reception and use of information about units inactive or using less than the guaranteed rate as described, wherein the communication units include transceivers.

The method for enhancing communication in a system with a plurality of electronic communication connections, including pre-computing with guaranteed data rates as described, and including reception and use of information about units inactive or using less than the guaranteed rate as described, wherein the communication units include transceivers and remote terminals.

In this description, numerous specific details are set forth. However, the embodiments/cases of the invention may be practiced without some of these specific details. In other instances, well-known hardware, materials, structures and techniques have not been shown in detail in order not to obscure the understanding of this description. In this description, references to "one embodiment" and "one case" mean that the feature being referred to may be included in at least one embodiment/case of the invention. Moreover, separate references to "one solution", or "some solutions", "one embodiment", "some embodiments", "one case", or "some cases" in this description do not necessarily refer to the same solution/embodiment/case. Illustrated solutions/embodiments/cases are not mutually exclusive, unless so stated and except as will be readily apparent to those of ordinary skill in the art. Thus, the invention may include any variety of combinations and/or integrations of the features of the solutions/embodiments/cases described herein. Also herein, flow diagrams illustrate non-limiting embodiment/case examples of the methods, and block diagrams illustrate non-limiting embodiment/case examples of the devices. Some operations in the flow diagrams may be described with reference to the solutions/embodiments/cases illustrated by the block diagrams. However, the methods of the flow diagrams could be performed by solutions/embodiments/cases of the invention other than those discussed with reference to the block diagrams, and solutions/embodiments/cases discussed with reference to the block diagrams could perform operations different from those discussed with reference to the flow diagrams. Moreover, although the flow diagrams may depict serial operations, certain solutions/embodiments/cases could perform certain operations in parallel and/or in different orders from those depicted. Moreover, the use of repeated reference numerals and/or letters in the text and/or drawings is for the purpose of simplicity and clarity and does not in itself dictate a relationship between the various solutions/embodiments/cases and/or configurations discussed. Furthermore, methods and mechanisms of the solutions/embodiments/cases will sometimes be described in singular form for clarity. However, some solutions/embodiments/cases may include multiple iterations of a method or multiple instantiations of a mechanism unless noted otherwise. For example, when a controller or an interface are disclosed in an embodiment/case, the scope of the embodiment/case is intended to also cover the use of multiple controllers or interfaces.

Certain features of the solutions/embodiments/cases, which may have been, for clarity, described in the context of separate solutions/embodiments/cases, may also be provided in various combinations in a single embodiment/case. Conversely, various features of the solutions/embodiments/cases, which may have been, for brevity, described in the context of a single embodiment/case, may also be provided separately or in any suitable sub-combination. The solutions/embodiments/cases are not limited in their applications to the details of the order or sequence of steps of operation of methods, or to details of implementation of devices, set in the description, drawings, or examples. In addition, individual blocks illustrated in the figures may be functional in nature and do not necessarily correspond to discrete hardware elements. While the methods disclosed herein have been described and shown with reference to particular steps performed in a particular order, it is understood that these steps may be combined, sub-divided, or reordered to form an equivalent method without departing from the teachings of the solutions/embodiments/cases. Accordingly, unless specifically indicated herein, the order and grouping of the steps is not a limitation of the solutions/embodiments/cases. Solutions/embodiments/cases described in conjunction with specific examples are presented by way of example, and not limitation. Moreover, it is evident that many alternatives, modifications and variations will be apparent to those skilled in the art. Accordingly, it is intended to embrace all such alternatives, modifications and variations that fall within the scope of the appended claims and their equivalents.

## Claims

1. A method for enhancing communication in a system with a plurality of electronic communication connections, comprising:
pre-computing a plurality of locally optimal configurations and parameters required to build such configurations; the method further **characterised in that** it comprises:
providing the plurality of locally optimal configurations and the parameters required to build such configurations for storing in a memory at a recipient communication unit data about the configurations and the parameters;
processing such data to create time sharing information;
conveying such time sharing information to communication units so that such communication units may transmit at such times and such power levels in accordance with one of the locally optimal configurations as to achieve enhanced communication within the system according to some criterion.

2. The method of claim 1, further comprising pre-computing a plurality of locally optimal configurations and parameters required to build such configurations when a new communication unit is added to the system.

3. The method of claim 2, further comprising pre-computing a plurality of locally optimal configurations and parameters required to build such configurations where the communication units have guaranteed data rates and the locally optimal configurations meet or exceed those guaranteed data rates.

4. The method of claim 3, further comprising:
receiving information that one or more communication units is either inactive at a particular time is requires less than a guaranteed data rate at a particular time;
using said information about units inactive or requiring less than guaranteed data rates to re-calculate a combination of configurations that will server the other units at higher than guaranteed data rates.

5. A central unit to be part of a communication system operative to serve multiple electronic communication lines, the central unit beingconfigured for receiving electronic data related to receiver channel characteristics; **characterised by** the central unit further having an optimizer adapted to operate an optimization routine to compute multiple locally optimal configurations and to identify locally optimal configuration points to reach desired data rates, a memory configured to store data representing the locally optimal configurations and locally optimal configuration points; the central unit further being adapted to compute a media access plan, and to convey the media access plan to transceivers for the transceivers to transmit in accordance with the plan.

6. The central unit of claim 5, wherein the central unit is adapted to perform one or more steps of the method according to the preceding claims.

7. The central unit of claim 6, the central unit having at least one selected from the group consisting of (i) an electronic receiver adapted to receive electronic data related to channel characteristics, (ii) an electronic transceiver adapted to receive electronic data related to channel characteristics, (iii) an electronic transmitter adapted to convey the media access plan, and (iv) an electronic transceiver adapted to convey the media access plan.

8. The central unit of claim 6 or 7, wherein the media access plan comprises information about time slots, about when transceivers should transmit, and/or about power levels at which transceivers should transmit.

9. The central unit of any of claims 6 to 8, comprising a data processing module adapted to compute the media access plan to achieve optimal system communication according to a criterion being one of selected from the group consisting of (i) a rule for absolute fairness; (ii) a rule for relative fairness; and (iii) a rule for maximizing the sum of all data rates.

10. The central unit of any of claims 6 to 9, wherein the memory is adapted to store information about data rates guaranteed to various communication units; and the electronic data about receiver channel characteristics comprises data about when a communication unit is in active and data about when a communication unit requires less than its guaranteed rate; and wherein the central unit is further configured to calculate locally optimal configurations and locally optimal parameters when all communication units are served with their guaranteed rates, and to calculate different combinations of locally optimal configurations when one or more communication units are either in active or require less than their guaranteed rates; wherein said different combinations include time sharing information that will provide higher than guaranteed rates to some communication units at a time when one or more other communication units either are inactive or require less than their guaranteed rates.

11. A system operative to serve multiple electronic communication lines, comprising:
a distribution point, comprising a central unit according to any of claims 5 to 10 and a plurality of transceivers;
a plurality of line interfaces; and
a crosstalk channel;
wherein the system is configured to compute locally optimal communication configurations, store in memory data about said configurations, process said data into time sharing information, and to convey such time sharing information to the transceivers wherein such transceivers later transmit in accordance with such time sharing information.

12. The system of claim 11, wherein each of said plurality of transceivers comprises a front end, comprising a digital front end and an analog front end, and a line driver, wherein the number of front ends in the system is more than one and less than the number of line interfaces; and wherein the system is configured to switch all communication transmissions between the locally optimal communication configurations, wherein in any locally optimal communication configuration, the number of active transmission connections is between 0 and the number of front ends, inclusive.

13. The system of claims 11 or 12, further comprising a plurality of remote terminals, wherein the system is configured to convey such time sharing information to the remote terminals, wherein such remote terminals later transmit in accordance with such time sharing information.

14. The system of claim 13, wherein:
each remote terminal has a guaranteed data for transmit from the terminal or for reception to the terminal or for both transmit and reception;
the system is configured to calculate locally optimal configurations where the system serves all the guaranteed data rates to and from all remote terminals; and
the system is configured to adapt the locally optimal configurations to server some remote terminals with higher than guaranteed data rates, when others of the remote terminals either are inactive or require less than their guaranteed rates.

15. The system of any of claims 11 to 14, wherein the system is at least one of: (i) a wireline communication system, (i) a wireless communication system, (iii) a hybrid communication system, (iv) provided with at least one central unit according to claims 5 to 10, and (v) configured to perform the method of any of claims 1 to 4.

## Patentansprüche

1. Verfahren zum Verbessern der Kommunikation in einem System mit mehreren elektronischen Kommunikationsverbindungen, welches Folgendes umfasst:
Vorberechnen mehrerer lokal optimaler Konfigurationen und Parameter, die zum Aufbauen solcher Konfigurationen erforderlich sind;
wobei das Verfahren ferner **dadurch gekennzeichnet ist, dass** es Folgendes umfasst:
Bereitstellen der mehreren lokal optimalen Konfigurationen und der Parameter, die zum Aufbauen solcher Konfigurationen erforderlich sind, zum Speichern von Daten über die Konfigurationen und die Parameter in einem Speicher in einer Empfänger-Kommunikationseinheit;
Verarbeiten solcher Daten zum Erzeugen von Timesharing-Informationen;
Vermitteln solcher Timesharing-Informationen an Kommunikationseinheiten, derart, dass solche Kommunikationseinheiten zu solchen Zeiten und auf solchen Leistungsstufen in Übereinstimmung mit einer der lokal optimalen Konfigurationen übertragen können, um verbesserte Kommunikation innerhalb des Systems gemäß einiger Kriterien zu erreichen.

2. Verfahren nach Anspruch 1, welches ferner das Vorberechnen mehrerer lokal optimaler Konfigurationen und Parameter umfasst, die zum Aufbauen solcher Konfigurationen erforderlich sind, wenn eine neue Kommunikationseinheit zum System hinzugefügt wird.

3. Verfahren nach Anspruch 2, welches ferner das Vorberechnen mehrerer lokal optimaler Konfigurationen und Parameter umfasst, die zum Aufbauen solcher Konfigurationen erforderlich sind, bei welchen die Kommunikationseinheiten garantierte Datenraten aufweisen und die lokal optimalen Konfigurationen diese garantierten Datenraten erfüllen oder übersteigen.

4. Verfahren nach Anspruch 3, welches ferner Folgendes umfasst:
Empfangen von Informationen, dass eine oder mehrere Kommunikationseinheiten entweder zu einer bestimmten Zeit inaktiv ist/sind oder zu einer bestimmten Zeit weniger als eine garantierte Datenrate benötigt/benötigen;
Verwenden der Informationen über Einheiten, die inaktiv sind oder weniger als garantierte Datenraten benötigen, zum Neuberechnen einer Kombination von Konfigurationen, welche die anderen Einheiten mit höheren als den garantierten Datenraten bedient.

5. Zentraleinheit, die Teil eines Kommunikationssystems sein soll, das zum Bedienen mehrerer elektronischer Kommunikationsleitungen geeignet ist, wobei die Zentraleinheit zum Empfangen elektronischer Daten in Bezug auf Empfängerkanaleigenschaften konfiguriert ist;
**dadurch gekennzeichnet, dass** die Zentraleinheit ferner einen Optimierer aufweist, der zum Betreiben einer Optimierungsroutine zum Berechnen mehrerer lokal optimaler Konfigurationen und zum Identifizieren lokal optimaler Konfigurationspunkte zum Erreichen gewünschter Datenraten geeignet ist, sowie einen Speicher, der zum Speichern von Daten, welche die lokal optimalen Konfigurationen und lokal optimale Konfigurationspunkte darstellen, konfiguriert ist;
wobei die Zentraleinheit ferner zum Berechnen eines Medienzugriffsplans und zum Übermitteln des Medienzugriffsplans an Sendeempfänger, damit die Sendeempfänger in Übereinstimmung mit dem Plan übertragen, geeignet ist.

6. Zentraleinheit nach Anspruch 5, wobei die Zentraleinheit zum Durchführen eines oder mehrerer Schritte des Verfahrens nach den vorhergehenden Ansprüchen geeignet ist.

7. Zentraleinheit nach Anspruch 6, wobei die Zentraleinheit mindestens eines ausgewählt aus der Gruppe bestehend aus (i) einem elektronischen Empfänger, der zum Empfangen elektronischer Daten in Bezug auf Kanaleigenschaften geeignet ist, (ii) einem elektronischen Sendeempfänger, der zum Empfangen elektronischer Daten in Bezug auf Kanaleigenschaften geeignet ist, (iii) einem elektronischen Sender, der zum Vermitteln des Medienzugriffsplans geeignet ist, und (iv) einem elektronischen Sendeempfänger, der zum Vermitteln des Medienzugriffsplans geeignet ist, aufweist.

8. Zentraleinheit nach Anspruch 6 oder 7, wobei der Medienzugriffsplan Informationen über Zeitschlitze, darüber, wann Sendeempfänger übertragen sollten, und/oder über Leistungsstufen, auf welchen Sendeempfänger übertragen sollten, umfasst.

9. Zentraleinheit nach einem der Ansprüche 6 bis 8, welche ein Datenverarbeitungsmodul umfasst, das zum Berechnen des Medienzugriffsplans zum Erreichen optimaler Systemkommunikation gemäß eines Kriteriums, bei welchem es sich um eines ausgewählt aus der Gruppe bestehend aus (i) einer Regel für absolute Fairness, (ii) einer Regel für relative Fairness und (iii) einer Regel für die Maximierung der Summe aller Datenraten handelt, geeignet ist.

10. Zentraleinheit nach einem der Ansprüche 6 bis 9, wobei der Speicher zum Speichern von Informationen über Datenraten, die verschiedenen Kommunikationseinheiten garantiert werden, geeignet ist; und die elektronischen Daten über Empfängerkanaleigenschaften Daten darüber, wann eine Kommunikationseinheit inaktiv ist, und Daten darüber, wann eine Kommunikationseinheit weniger als ihre garantierte Rate benötigt, umfassen; und wobei die Zentraleinheit ferner zum Berechnen lokal optimaler Konfigurationen und lokal optimaler Parameter, wenn alle Kommunikationseinheiten mit ihren garantierten Raten bedient werden, und zum Berechnen unterschiedlicher Kombinationen lokal optimaler Konfigurationen, wenn eine oder mehrere Kommunikationseinheiten entweder inaktiv ist/sind oder weniger als ihre garantierten Raten benötigt/benötigen, konfiguriert ist; wobei die unterschiedlichen Kombinationen Timesharing-Informationen beinhalten, die höhere als die garantierten Raten an einige Kommunikationseinheiten bereitstellen, zu einer Zeit, wenn eine oder mehrere andere Kommunikationseinheiten entweder inaktiv ist/sind oder weniger als ihre garantierten Raten benötigt/benötigen.

11. System, welches zum Bedienen mehrerer elektronischer Kommunikationsleitungen geeignet ist, welches Folgendes umfasst:
einen Verteilungspunkt, der eine Zentraleinheit nach einem der Ansprüche 5 bis 10 und mehrere Sendeempfänger umfasst;
mehrere Leitungsschnittstellen; und
einen Übersprechkanal;
wobei das System zum Berechnen lokal optimaler Kommunikationskonfigurationen, zum Speichern von Daten über die Konfigurationen im Speicher, zum Verarbeiten der Daten in Timesharing-Informationen und zum Vermitteln solcher Timesharing-Informationen an die Sendeempfänger, wobei solche Sendeempfänger später in Übereinstimmung mit solchen Timesharing-Informationen übertragen, konfiguriert ist.

12. System nach Anspruch 11, wobei jeder der mehreren Sendeempfänger ein Frontend, welches ein digitales Frontend und ein analoges Frontend umfasst, und einen Leitungstreiber umfasst, wobei die Zahl der Frontends in dem System größer als eins und kleiner als die Zahl der Leitungsschnittstellen ist; und wobei das System zum Schalten aller Kommunikationsübertragungen zwischen den lokal optimalen Kommunikationskonfigurationen konfiguriert ist, wobei in jeder lokal optimalen Kommunikationskonfiguration die Zahl aktiver Übertragungsverbindungen zwischen 0 und einschließlich der Zahl der Frontends liegt.

13. System nach Anspruch 11 oder 12, welches ferner mehrere entfernte Endgeräte umfasst, wobei das System zum Vermitteln solcher Timesharing-Informationen an die entfernten Endgeräte konfiguriert ist, wobei solche entfernten Endgeräte später in Übereinstimmung mit solchen Timesharing-Informationen übertragen.

14. System nach Anspruch 13, wobei:
jedes entfernte Endgerät eine garantierte Datenrate zum Übertragen von dem Endgerät oder zum Empfangen an dem Endgerät oder für sowohl Übertragung als auch Empfang aufweist;
das System zum Berechnen lokal optimaler Konfigurationen, bei welchen das System sämtliche garantierten Datenraten an und von alle/n entfernten Endgeräte/n bereitstellt, konfiguriert ist; und
das System zum Anpassen der lokal optimalen Konfigurationen zum Bedienen einiger entfernter Endgeräte mit höheren als den garantierten Datenraten, wenn andere der entfernten Endgeräte entweder inaktiv sind oder weniger als ihre garantierten Raten benötigen, konfiguriert ist.

15. System nach einem der Ansprüche 11 bis 14, wobei das System mindestens eines der Folgenden ist: (i) ein Festnetzkommunikationssystem, (ii) ein drahtloses Kommunikationssystem, (iii) ein Hybridkommunikationssystem, (iv) versehen mit mindestens einer Zentraleinheit nach Anspruch 5 bis 10 und (v) konfiguriert zum Durchführen des Verfahrens nach einem der Ansprüche 1 bis 4.

## Revendications

1. Procédé pour améliorer une communication dans un système avec une pluralité de connexions de communication électronique, consistant à :
précalculer une pluralité de configurations localement optimales et des paramètres nécessaires pour construire de telles configurations ;
le procédé étant en outre **caractérisé en ce qu'**il consiste à :
fournir la pluralité de configurations localement optimales et les paramètres nécessaires pour construire de telles configurations pour stocker dans une mémoire au niveau d'une unité de communication de destinataire des données concernant les configurations et les paramètres ;
traiter de telles données pour créer des informations de partage de temps ;
transmettre de telles informations de partage de temps à des unités de communication de telle sorte que de telles unités de communication puissent transmettre à de tels moments et à de tels niveaux de puissance en fonction de l'une des configurations localement optimales de sorte à obtenir une communication améliorée dans le système en fonction d'un certain critère.

2. Procédé selon la revendication 1, consistant en outre à précalculer une pluralité de configurations localement optimales et des paramètres nécessaires pour construire de telles configurations lorsqu'une nouvelle unité de communication est ajoutée au système.

3. Procédé selon la revendication 2, consistant en outre à précalculer une pluralité de configurations localement optimales et des paramètres nécessaires pour construire de telles configurations lorsque les unités de communication présentent des taux de transfert de données garantis et que les configurations localement optimales satisfont ou dépassent ces taux de transfert de données garantis.

4. Procédé selon la revendication 3, consistant en outre à :
recevoir des informations indiquant qu'une ou plusieurs unités de communication sont soit inactives à un moment particulier, soit exigent un taux de transfert de données inférieur au taux de transfert de données garanti à un moment particulier ;
utiliser lesdites informations concernant des unités inactives ou exigent des taux de transfert de données inférieurs au taux de transfert de données garanti pour recalculer une combinaison de configurations qui desserviront les autres unités à des taux de transfert de données plus élevés que les taux de transfert de données garantis.

5. Unité centrale qui doit faire partie d'un système de communication destiné à desservir de multiples lignes de communication électronique, l'unité centrale étant configurée pour recevoir des données électroniques se rapportant à des caractéristiques de canal de récepteur, **caractérisée en ce que**
l'unité central ayant en outre un optimiseur conçu pour faire fonctionner une routine d'optimisation afin de calculer des configurations localement optimales et pour identifier des points de configuration localement optimale afin d'atteindre à des taux de transfert de données souhaités, une mémoire configurée pour stocker des données représentant les configurations localement optimales et les points de configuration localement optimale ; l'unité centrale étant en outre conçue pour calculer un plan d'accès au support et pour transmettre le plan d'accès au support à des émetteurs-récepteurs pour que les émetteurs-récepteurs transmettent en fonction du plan.

6. Unité centrale selon la revendication 5, dans laquelle l'unité centrale est conçue pour réaliser un ou plusieurs étapes du procédé selon les revendications précédentes.

7. Unité centrale selon la revendication 6, l'unité centrale ayant au moins un élément sélectionné dans le groupe constitué par (i) un récepteur électronique conçu pour recevoir des données électroniques se rapportant à des caractéristiques de canal, (ii) un émetteur-récepteur électronique conçu pour recevoir des données électroniques se rapportant à des caractéristiques de canal, (iii) un émetteur-récepteur électronique conçu pour transmettre le plan d'accès au support et (iv) un émetteur-récepteur électronique conçu pour transmettre le plan d'accès au support.

8. Unité centrale selon la revendication 6 ou 7, dans laquelle le plan d'accès au support comporte des informations concernant des intervalles de temps, concernant le moment où des émetteurs-récepteurs devraient transmettre et/ou concernant des niveaux de puissance auxquels des émetteurs-récepteurs devraient transmettre.

9. Unité centrale selon l'une quelconque des revendications 6 à 8, comprenant un module de traitement de données conçu pour calculer le plan d'accès au support pour obtenir une communication de système optimale en fonction d'un critère qui une règle sélectionnée dans le groupe constituée par (i) une règle pour une équité absolue ; (ii) une règle pour une équité relative ; et (iii) une règle pour maximiser la somme de tous les taux de transfert de données.

10. Unité centrale selon l'une quelconque des revendications 6 à 9, dans laquelle la mémoire est conçue pour stocker des informations concernant des taux de transfert de données garantis diverses unités de communication ; et les données électroniques concernant des caractéristiques de canal de récepteur comportent des données concernant le moment où une unité de communication est active, et des données concernant le moment où une unité de communication exige un taux de transfert de données inférieur à son taux de transfert garanti ; et dans laquelle l'unité centrale est en outre configurée pour calculer des configurations localement optimales et des paramètres localement optimaux lorsque toutes les unités de communication sont desservies avec leurs taux de transfert garantis, et pour calculer différentes combinaisons de configurations localement optimales lorsqu'une ou plusieurs unités de communication sont soit actives, soit exigent des taux de transfert inférieurs à leurs de taux de transfert garantis ; dans laquelle lesdites différentes combinaisons comportent des informations de partage de temps qui fourniront des taux de transfert plus élevés que les taux de transfert garantis à quelques unités de communications à un moment où une ou plusieurs autres unités de communication sont soit inactives, soit exigent des taux de transfert inférieurs à leurs taux de transfert garantis.

11. Système destiné à desservir de multiples lignes de communication électronique, comprenant :
un point de distribution, comprenant une unité centrale selon l'une quelconque des revendications 5 à 10 et une pluralité d'émetteurs-récepteurs ;
une pluralité d'interfaces de ligne ; et
un canal de diaphonie ;
dans lequel le système est configuré pour calculer des configurations de communication localement optimales, pour stocker dans une mémoire des données concernant lesdites configurations, pour traiter lesdites données dans des informations de partage de temps et pour transmettre de telles informations de partage de temps aux émetteurs-récepteurs, dans lequel de tels émetteurs-récepteurs transmettent plus tard en fonction de telles informations de partage de temps.

12. Système selon la revendication 11, dans lequel chaque émetteur-récepteur de ladite pluralité d'émetteurs-récepteurs comprend une extrémité frontale, comprenant une extrémité frontale numérique et une extrémité frontale analogique, et un dispositif de commande de ligne, dans lequel le nombre d'extrémités frontales dans le système est supérieur à un et inférieur au nombre d'interfaces de ligne ; et dans lequel le système est configuré pour commuter toutes les transmissions de communication entre les configurations de communication localement optimales, dans lequel, dans une configuration de communication localement optimale, le nombre de connexions de transmission actives est compris entre 0 et le nombre d'extrémités frontales, y compris.

13. Système selon les revendications 11 ou 12, comprenant en outre une pluralité de terminaux distants, dans lequel le système est configuré pour transmettre de telles informations de partage de temps aux terminaux distants, dans lequel de tels terminaux distants transmettent plus tard en fonction de telles informations de partage de temps.

14. Système selon la revendication 13, dans lequel :
chaque terminal distant comporte des données garanties pour une transmission depuis le terminal ou pour une réception au terminal ou à la fois pour une transmission et une réception ;
le système est en outre configuré pour calculer des configurations localement optimales lorsque le système dessert tous les taux de transfert de données garantis à tous les terminaux distants et à partir de ces derniers ; et
le système est configuré pour adapter les configurations localement optimales pour desservir quelques terminaux distants avec des taux de transfert de données plus élevés que les taux de transfert de données garantis lorsque d'autres terminaux distants sont soit inactifs, soit exigent des taux de transfert inférieurs aux taux de transfert garantis.

15. Système selon l'une quelconque des revendications 11 à 14, dans lequel le système est : (i) un système de communication filaire et/ou (i) un système de communication sans fil et/ou (iii) un système de communication hybride et/ou (iv) comporte au moins une unité centrale selon les revendications 5 à 10 et/ou (v) configuré pour réaliser le procédé selon l'une quelconque des revendications 1 à 4.
